# EUROPEAN PATENT SPECIFICATION

(11) **EP 1 059 629 B1**
(45) Date of publication and mention of the grant of the patent: **29.10.2003**
(21) Application number: 00304517.6
(22) Date of filing: 26.05.2000
(51) Int. Cl.: G11B 5/66

(54) **Magnetic recording medium, magnetic storage apparatus, recording method and method of producing magnetic recording medium**
Magnetaufzeichnungsmedium, Magnetspeichergerät, -aufzeichnungsmethode und Magnetaufzeichnungsmedium-Herstellungsverfahren
Milieu d'enregistrement magnétique, appareil de stockage magnétique, méthode d'enregistrement et méthode de production de milieu magnétique d'enregistrement

(30) Priority: 08.06.1999 JP 16132999; 07.04.2000 JP 2000107075; 07.04.2000 JP 2000107071; 07.04.2000 JP 2000107076; 07.04.2000 JP 2000107074; 07.04.2000 JP 2000107072
(43) Date of publication of application: 13.12.2000
(60) Divisional application: 02028936.9
(73) Proprietor: FUJITSU LIMITED, Kawasaki-shi, Kanagawa 211-8588 (JP)
(72) Inventor: Abarra, E. Noel c/o Fujitsu Ltd, Kawasaki-shi, Kanagawa 211-8588 (JP); Okamoto, Iwao c/o Fujitsu Limited, Kawasaki-shi, Kanagawa 211-8588 (JP); Mizoshita, Yoshifumi c/o Fujitsu Ltd., Kawasaki-shi, Kanagawa 211-8588 (JP); Yoshida, Yuki Fujitsu Ltd, Kawasaki-shi, Kanagawa 211-8588 (JP); Umeda, Hisashi c/o Fujitsu Ltd., Kawasaki-shi, Kanagawa 211-8588 (JP); Suzuki, Masaya c/o Fujitsu Ltd, Kawasaki-shi, Kanagawa 211-8588 (JP); Akimoto, Hideyuki c/o Fujitsu Ltd., Kawasaki-shi, Kanagawa 211-8588 (JP); Sato, Hisateru c/o Fujitsu ltd., Kawasaki-shi, Kanagawa 211-8588 (JP); Kaitsu, Isatake c/o Fujitsu limited, Kawasaki-shi, Kanagawa 211-8588 (JP)
(74) Representative: Fenlon, Christine Lesley

(56) References cited:
- EP-A- 0 892 393
- DE-A- 19 700 506
- US-A- 5 147 732
- US-A- 5 843 569
- US-A- 5 851 643
- BAIBICH M N ET AL: "GIANT MAGNETORESISTANCE OF (001)FE/(001)CR MAGNETIC SUPERLATTICES", PHYSICAL REVIEW LETTERS vol. 61, no. 21, 21.11.1988, pages 2472 - 2475
- PARKIN S S ET AL: "OSCILLATIONS IN EXCHANGE COUPLING AND MAGNETORESISTANCE IN METALLIC SUPERLATTICE STRUCTURES: CO/RU, CO/CR, AND CO/FE", PHYSICAL REVIEW LETTERS vol. 64, no. 19, 07.05.1990, pages 2304 - 2307
- PARKIN S S: "SYSTEMATIC VARIATION OF THE STRENGTH AND OSCILLATION PERIOD OF INDIRECT MAGNETIC EXCHANGE COUPLING THROUGH THE 3D, 4D AND 5D TRANSITION METALS", PHYSICAL REVIEW LETTERS vol. 67, no. 25, 16.12.1991, pages 3598 - 3601

## Description

The present invention generally relates to magnetic recording media and magnetic storage apparatuses, and more particularly to a magnetic recording medium and a magnetic storage apparatus which are suited for high-density recording. The present invention also relates to a recording method for magnetically recording information on a magnetic recording medium, and to a method of producing such a magnetic recording medium.

The recording density of longitudinal magnetic recording media, such as magnetic disks, has been increased considerably, due to the reduction of medium noise and the development of magnetoresistive and high-sensitivity spin-valve heads. A typical magnetic recording medium is comprised of a substrate, an underlayer, a magnetic layer, and a protection layer which are successively stacked in this order. The underlayer is made of Cr or a Cr-based alloy, and the magnetic layer is made of a Co-based alloy.

Various methods have been proposed to reduce the medium noise. For example, Okamoto et al., "Rigid Disk Medium For 5 Gbit/in² Recording", AB-3, Intermag '96 Digest, proposes decreasing the grain size and size distribution of the magnetic layer by reducing the magnetic layer thickness by the proper use of an underlayer made of CrMo, and U.S. Patent No.5,693,426 proposes the use of an underlayer made of NiAl. Further, Hosoe et al., "Experimental Study of Thermal Decay in High-Density Magnetic Recording Media", IEEE Trans. Magn. Vol.33, 1528 (1997), for example, proposes the use of an underlayer made of CrTiB. The underlayers described above also promote c-axis orientation of the magnetic layer in a plane which increases the remanent magnetization and the thermal stability of written bits. In addition, proposals have been made to reduce the thickness of the magnetic layer, to increase the resolution or to decrease the transition width between written bits. Furthermore, proposals have been made to decrease the exchange coupling between grains by promoting more Cr segregation in the magnetic layer which is made of CoCr-based alloy.

However, as the grains of the magnetic layer become smaller and more magnetically isolated from each other, the written bits become unstable due to thermal activation and to demagnetizing fields which increase with linear density. Lu et al., "Thermal Instability at 10 Gbit/in² Magnetic Recording", IEEE Trans. Magn. Vol.30, 4230 (1994), demonstrated, by micromagnetic simulation, that exchange-decoupled grains having a diameter of 10 nm and ratio KᵤV/k_{B}T∼60 in 400 kfci di-bits are susceptible to significant thermal decay, where Kᵤ denotes the magnetic anisotropy constant, V denotes the average magnetic grain volume, k_{B} denotes the Boltzmann constant, and T denotes the temperature. The ratio KᵤV/k_{B}T is also referred to as a thermal stability factor.

It has been reported in Abarra et al., "Thermal Stability of Narrow Track Bits in a 5 Gbit/in² Medium", IEEE Trans. Magn. Vol.33, 2995 (1997),that the presence of intergranular exchange interaction stabilizes written bits, by MFM studies of annealed 200 kfci bits on a 5 Gbit/in² CoCrPtTa/CrMo medium. However, more grain decoupling is essential for recording densities of 20 Gbit/in² or greater.

The obvious solution has been to increase the magnetic anisotropy of the magnetic layer. But unfortunately, the increased magnetic anisotropy places a great demand on the head write field which degrades the "overwrite" performance which is the ability to write over previously written data.

In addition, the coercivity of thermally unstable magnetic recording media increases rapidly with decreasing switching time, as reported in He et al., "High Speed Switching in Magnetic Recording Media", J. Magn. Magn. Mater. Vol.155, 6 (1996), for magnetic tape media, and in J. H. Richter, "Dynamic Coervicity Effects in Thin Film Media", IEEE Trans. Magn. Vol.34, 1540 (1997), for magnetic disk media. Consequently, the adverse effects are introduced in the data rate, that is how fast data can be written on the magnetic layer and the amount of head field required to reverse the magnetic grains.

On the other hand, another proposed method of improving the thermal stability increases the orientation ratio of the magnetic layer, by appropriately texturing the substrate under the magnetic layer. For example, Akimoto et al., "Relationship Between Magnetic Circumferential Orientation and Magnetic Thermal Stability", J. Magn. Magn. Mater. vol.193, pp.240-242(1999), in press, report, through micromagnetic simulation, that the effective ratio KᵤV/k_{B}T is enhanced by a slight increase in the orientation ratio. This further results in a weaker time dependence for the coercivity which improves the overwrite performance of the magnetic recording medium, as reported in Abarra et al., "The Effect of Orientation Ratio on the Dynamic Coercivity of Media for >15 Gbit/in² Recording", IEEE Trans. Magn. vol.35, pp.2709-2711, 1999.

Furthermore, keepered magnetic recording media have been proposed for thermal stability improvement. The keeper layer is made up of a magnetically soft layer parallel to the magnetic layer. This soft layer can be disposed above or below the magnetic layer. Oftentimes, a Cr isolation layer is interposed between the soft layer and the magnetic layer. The soft layer reduces the demagnetizing fields in written bits on the magnetic layer. However, coupling the magnetic layer to a continuously-exchanged coupled soft layer defeats the purpose of decoupling the grains of the magnetic layer. As a result, the medium noise increases.

Various methods have been proposed to improve the thermal stability and to reduce the medium noise. However, the proposed methods do not provide a considerable improvement of the thermal stability of written bits, thereby making it difficult to greatly reduce the medium noise. In addition, some of the proposed methods introduce adverse effects on the performance of the 'magnetic recording medium due to the measures taken to reduce the medium noise.

More particularly, in order to obtain a thermally stable performance of the magnetic recording medium,. it is conceivable to (i) increase the magnetic anisotropy constant Kᵤ, (ii) decrease the temperature T or, (iii) increase the grain volume V of the magnetic layer. However, measure (i) increases the coercivity, thereby making it more difficult to write information on the magnetic layer. In addition, measure (ii) is impractical since in magnetic disk drives, for example, the operating temperature may become greater than 60° C. Furthermore, measure (iii) increases the medium noise as described above. As an alternative for measure (iii), it is conceivable to increase the thickness of the magnetic layer, but this would lead to deterioration of the resolution.

Accordingly, it is desirable to provide a magnetic recording medium through which the thermal stability of written bits can be improved without increasing the medium noise, so as to enable reliable high-density recording without introducing adverse effects on the performance of the magnetic recording medium, that is unnecessarily increasing the magnetic anisotropy.

According to a first aspect of the present invention there is provided a magnetic recording medium characterized by: at least one exchange layer structure comprising a first layer of ferromagnetic material and a second layer forming a non-magnetic coupling layer provided on said first layer; and a third layer of magnetic material formed on said exchange layer structure above said second layer; said first layer and said third layer being exchange-coupled and having antiparallel magnetizations.

In such a magnetic recording medium the thermal stability of written bits can be improved, so as to enable reliable high-density recording without degrading the overwrite performance.

US-A-5851643 discloses a magnetic recording medium with a magnetic film made from at least two layers stacked via a non-magnetic intermediate layer. The magnetic film is formed on a structure control underlayer situated on a non-magnetic substrate. However, unlike the present invention, the two magnetic layers do not have antiparallel magnetisations.

According to a second aspect of the present invention there is provided a magnetic storage apparatus comprising at least one magnetic recording medium and means for recording information on and/or reproducing information from said at least one magnetic recording medium, characterised in that said at least one magnetic recording medium comprises: at least one exchange layer structure comprising a first layer of ferromagnetic material and a second layer forming a non-magnetic coupling layer provided on said first layer; and a third layer of magnetic material formed on said exchange layer structure above said second layer; said first layer and said third layer being exchange-coupled and having antiparallel magnetizations.

Reference will now be made, by way of example, to the accompanying drawings, in which:
FIG. 1 is a cross sectional view showing an important part of a first embodiment of the magnetic recording medium according to the present invention;
FIG. 2 is a cross sectional view showing an important part of a second embodiment of the magnetic recording medium according to the present invention;
FIG. 3 is a diagram showing an in-plane magnetization curve of a single CoPt layer having a thickness of 10 nm on a Si substrate;
FIG. 4 is a diagram showing an in-plane magnetization curve of two CoPt layers separated by a Ru layer having a thickness of 0.8 nm;
FIG. 5 is a diagram showing an in-plane magnetization curve of two CoPt layers separated by a Ru layer having a thickness of 1.4 nm;
FIG. 6 is a diagram showing an in-plane magnetization curve two CoCrPt layers separated by a Ru having a thickness of 0.8 nm;
FIG. 7 is a cross sectional view showing an important part of an embodiment of the magnetic storage apparatus according to the present invention;
FIG. 8 is a plan view showing the important part of the embodiment of the magnetic storage apparatus;
FIG. 9 is a diagram showing an in-plane magnetization curve for a magnetic recording medium having a single CoCrPtB layer grown on a NiAl layer on glass;
FIG. 10 is a diagram showing an. in-plane magnetization curve for a magnetic recording medium having two ferromagnetic layers of CoCrPtB separated by a Ru layer having a thickness of 0.8 nm on a NiP coated Al-Mg substrate;
FIG. 11 is a diagram showing an in-plane magnetization curve for a magnetic recording medium having two ferromagnetic layers of CoCrPtB separated by a Ru layer on a NiP coated Al substrate;
FIG. 12 is a diagram showing an in-plane magnetization curve for a magnetic recording medium having three ferromagnetic layers of CoCrPtB separated by a Ru layer between each two adjacent CoCrPtB layers on a NiP coated Al substrate;
FIG. 13 is a diagram showing an in-plane magnetization curve for a magnetic recording medium having two negatively coupled ferromagnetic layers of CoCrPtB separated by a Ru layer, on a NiAl coated glass substrate;
FIG. 14 is a diagram showing an in-plane magnetization curve shown in FIG. 13 in comparison with a magnetic recording medium having a single ferromagnetic layer of CoCrPtB on a NiAl coated glass substrate;
FIG. 15 is a diagram showing signal decays of the magnetic recording media having two and three ferromagnetic layers, in comparison with a signal decay of the magnetic recording medium having the single ferromagnetic layer;
FIG. 16 is a diagram showing M-H curves of the magnetic recording medium having the two negatively coupled ferromagnetic layers at different temperatures;
FIG. 17 is a diagram showing the temperature dependence of the coercivity for the magnetic recording medium having the characteristics shown in FIG. 16;
FIG. 18 is a diagram showing the PW50 dependence on the effective and total ferromagnetic layer thickness of the magnetic recording media having one, two and three ferromagnetic layers;
FIG. 19 is a diagram showing the effective thickness dependence of the change in isolated wave medium SNR;
FIG. 20 is a diagram showing the general construction of a magnetic recording medium producing apparatus;
FIG. 21 is a diagram showing the dependence of isolated wave output on magnetic layer thickness;
FIG. 22 is a diagram showing the temperature dependence of high-frequency SNR;
FIG. 23 is a diagram showing a relation ship of the isolated wave medium SNR Siso/Nm and the sputtering rate of Ru;

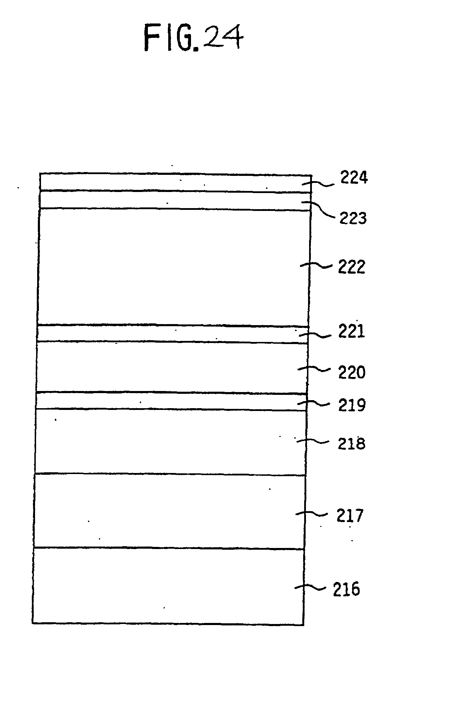

FIG. 24 is a cross sectional view showing an important part of a fourth embodiment of the magnetic recording medium according to the present invention;

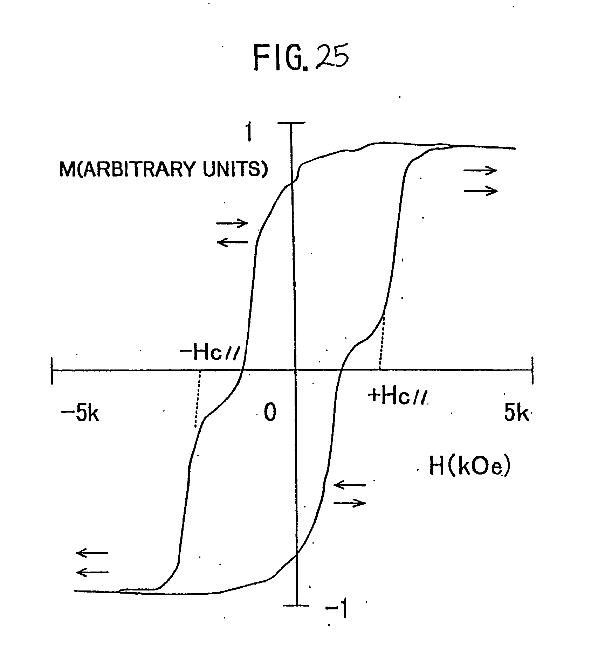

FIG. 25 is a diagram showing a magnetization curve which is obtained when pure Ru is used for a non-magnetic coupling layer of the magnetic recording medium; and
FIG. 26 is a diagram showing a magnetization curve which is measured by a vertical Kerr looper while applying a magnetic field in a perpendicular direction with respect to a sample surface.

First, a description will be given of the operating principle of the present invention.

The present invention submits the use of layers with antiparallel magnetization structures. For example, S. S. P. Parkin, "Systematic Variation of the Strength and Oscillation Period of Indirect Magnetic Exchange Coupling through the 3d, 4d, and 5d Transition Metals", Phys. Rev. Lett. Vol.67, 3598 (1991) describes several magnetic transition metals such as Co, Fe and Ni that are coupled through thin non-magnetic interlayers such as Ru and Rh. On the other hand, U.S. Patent No.5,701,223 proposes a spin-valve which employs the above described layers as laminated pinning layers to stabilize the sensor.

For a particular Ru or Ir layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The present invention increases the thermal stability of written bits by exchange coupling the magnetic layer to another ferromagnetic layer with an opposite magnetization or by a laminated ferrimagnetic structure. The ferromagnetic layer or the laminated ferrimagnetic structure is made up of .exchange-decoupled grains as the magnetic layer. In other words, the present invention uses an exchange pinning ferromagnetic layer or a ferrimagnetic multilayer to improve the thermal stability performance of the magnetic recording medium.

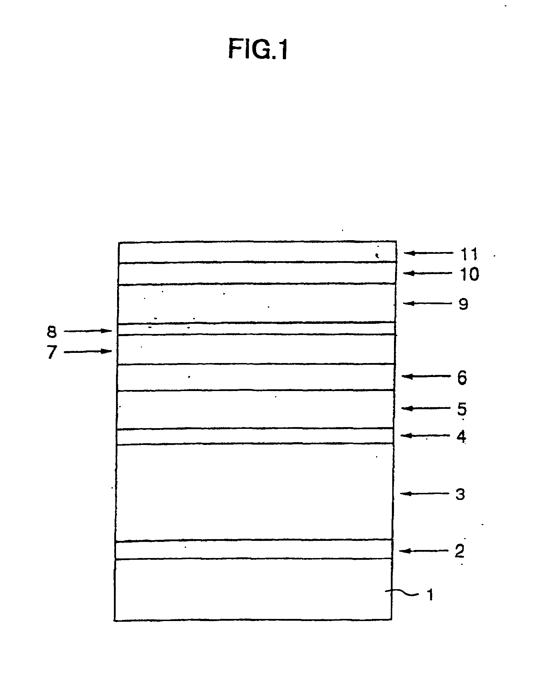

FIG. 1 is a cross sectional view showing an important part of a first embodiment of a magnetic recording medium according to the present invention.

The magnetic recording medium includes a non-magnetic substrate 1, a first seed layer 2, a NiP layer 3, a second seed layer 4, an underlayer 5, a non-magnetic intermediate layer 6, a ferromagnetic layer 7, a non-magnetic coupling layer 8, a magnetic layer 9, a protection layer 10, and a lubricant layer 11 which are stacked in the order shown in FIG. 1.

For example, the non-magnetic substrate 1 is made of Al, Al alloy or glass. This non-magnetic substrate 1 may or may not be mechanically textured. The first seed layer 2 is made of Cr or Ti, for example, especially in the case where the non-magnetic substrate 1 is made of glass. The NiP layer 3 is preferably oxidized and may or may not be mechanically textured. The second seed layer 4 is provided to promote a (001) or a (112) texture-of the underlayer 5 when using a B2 structure alloy such as NiAl and FeAl for the underlayer 5. The second seed layer 4 is made of an appropriate material similar to that of the first seed layer 2.

In a case where the magnetic recording medium is a magnetic disk, the mechanical texturing provided on the non-magnetic substrate 1 or the NiP layer 3 is made in a circumferential direction of the disk, that is, in a direction in which tracks of the disk extend.

The non-magnetic intermediate layer 6 is provided to further promote epitaxy, narrow the grain distribution of the magnetic layer 9, and orient the anisotropy axes of the magnetic layer 9 along a plane parallel to the recording surface of the magnetic recording medium. This non-magnetic intermediate layer 6 is made of a hcp structure alloy such as CoCr-M, where M = B, Mo, Nb, Ta, W, Cu or alloys thereof, and has a thickness in a range of 1 to 5 nm.

The ferromagnetic layer 7 is made of Co, Ni, Fe, Co-based alloy, Ni-based alloy, Fe-based alloy or the like. In other words, alloys such as CoCrTa, CoCrPt and CoCrPt-M, where M = B, Mo, Nb, Ta, W, Cu or alloys thereof may be used for the ferromagnetic layer 7. This ferromagnetic layer 7 has a thickness in a range of 2 to 10 nm. The non-coupling magnetic layer 8 is made of Ru, Ir, Rh, Cr, Cu, Ru-based alloy, Ir-based alloy, Rh-based alloy, Cu-based alloy, Cr-based alloy or the like. This non-magnetic coupling layer 8 preferably has a thickness in a range of 0.4 to 1.0 nm for antiparallel coupling using Ru, and preferably of the order of approximately 0.6 to 0.8 nm for an antiparallel coupling using Ru. For this particular thickness range of the non-magnetic coupling layer 8, the magnetizations of the ferromagnetic layer 7 and the magnetic layer 9 are antiparallel. The ferromagnetic layer 7 and the non-magnetic coupling layer 8 form an exchange layer structure.

For a ferromagnetic layer 7 made of a Fe-based alloy, Cr forms a better non-magnetic coupling layer 8. In this case, the Cr non-magnetic coupling layer 8 has an optimum thickness of approximately 1.8 nm.

The magnetic layer 9 is made of Co or a Co-based alloy such as CoCrTa, CoCrPt and CoCrPt-M, where M = B, Mo, Nb, Ta, W, Cu or alloys thereof. The magnetic layer 9 has a thickness in a range of 5 to 30 nm. Of course, the magnetic layer 9 is not limited to a single-layer structure, and a multi-layer structure may be used for the magnetic layer 9.

The protection layer 10 is made of C, for example. In addition, the lubricant layer 11 is made of an organic lubricant, for example, for use with a magnetic transducer such as a spin-valve head. The protection layer 10 and the lubricant layer 11 form a protection layer structure on the recording surface of the magnetic recording medium.

Obviously, the layer structure under the exchange layer structure is not limited to that shown in FIG. 1. For example, the underlayer 5 may be made of Cr or Cr-based alloy and formed to a thickness in a range of 5 to 40 nm on the substrate 1, and the exchange layer structure may be provided on this underlayer 5.

Next, a description will be given of a second embodiment of the magnetic recording medium according to the present invention.

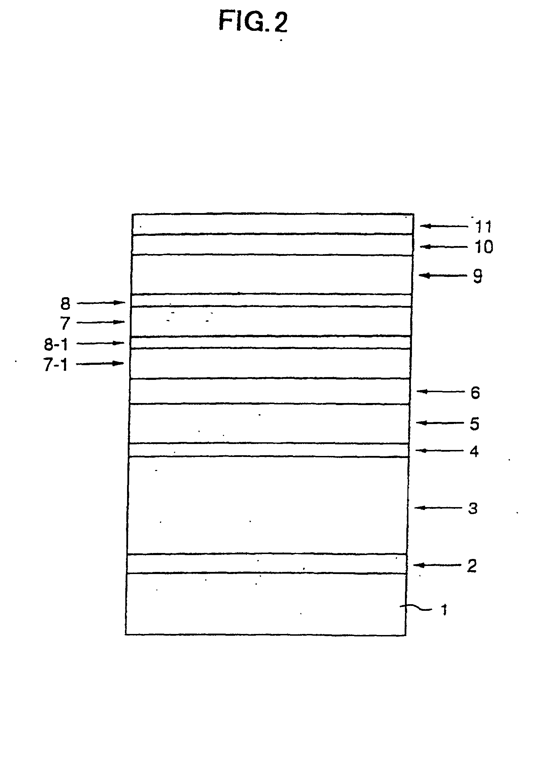

FIG. 2 is a cross sectional view showing an important part of the second-embodiment of the magnetic recording medium. In FIG. 2, those parts which are the same as those corresponding parts in FIG. 1 are designated by the same reference numerals, and a description thereof will be omitted.

In this second embodiment of the magnetic recording medium, the exchange layer structure includes two non-magnetic coupling layers 8 and 8-1, and two ferromagnetic layers 7 and 7-1, which form a ferrimagnetic multilayer. This arrangement increases the effective magnetization and signal, since the magnetizations of the two non-magnetic coupling layers 8 and 8-1 cancel each other instead of a portion of the magnetic layer 9. As a result, the grain volume and thermal stability of magnetization of the. magnetic layer 9 are effectively increased. More bilayer structures made up of the pair of ferromagnetic layer and non-magnetic coupling layer may be provided additionally to increase the effective grain volume, as long as the easy axis of magnetization is appropriately oriented for the subsequently provided layers.

The ferromagnetic layer 7-1 is made of a material similar to that of ferromagnetic layer 7, and has a thickness range selected similarly to the ferromagnetic layer 7. In addition, the non-magnetic coupling layer 8-1 is made of a material similar to that of the non-magnetic coupling layer 8, and has a thickness range selected similarly to the non-magnetic coupling layer 8. Within the ferromagnetic layers 7-1 and 7, the c-axes are preferably in-plane and the grain growth columnar.

In this embodiment, the magnetic anisotropy of the ferromagnetic layer 7-1 is preferably higher than that of the ferromagnetic layer 7. However, the magnetic anisotropy of the ferromagnetic layer 7-1 may be the same as, or be higher than that of, the magnetic layer 9.

Furthermore, a remanent magnetization and thickness product of the ferromagnetic layer 7 may be smaller than that of the ferromagnetic layer 7-1.

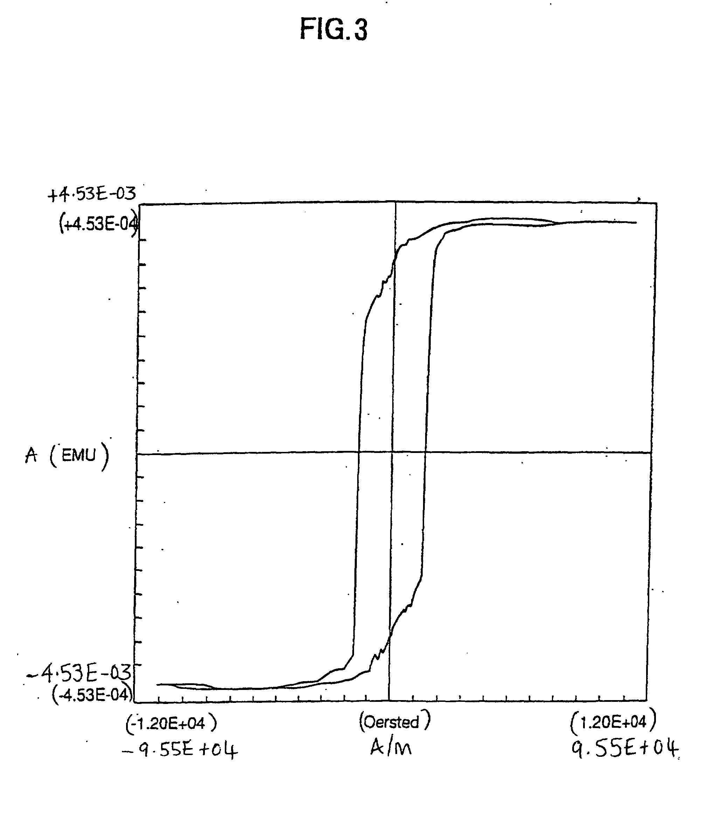

FIG. 3 is a diagram showing an in-plane magnetization curve of a single CoPt layer having a thickness of 10 nm on a Si substrate. In FIG. 3, the ordinate indicates the magnetization ( A ), and the abscissa indicates the magnetic field (A/m). Conventional magnetic recording media show a behavior similar to that shown in FIG. 3.

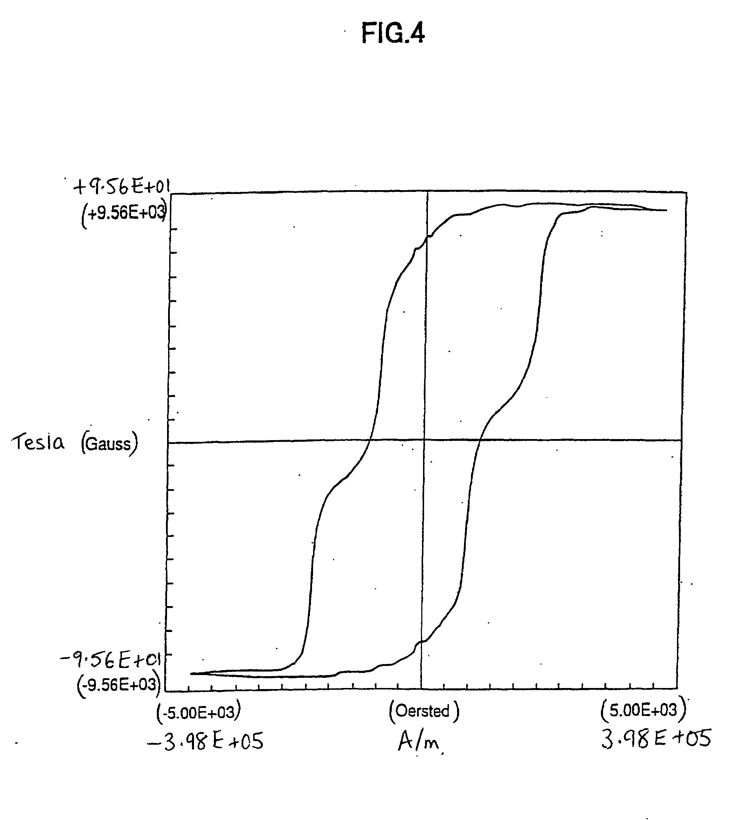

FIG. 4 is a diagram showing an in-plane magnetization curve of two CoPt layers separated by a Ru layer having a thickness of 0.8 nm, as in the case of the first embodiment of the magnetic recording medium. In FIG. 4, the ordinate indicates the magnetization (Tesla), and the abscissa indicates the magnetic field (A/m). As may be seen from FIG. 4, the loop shows shifts near the magnetic field which indicate the antiparallel coupling.

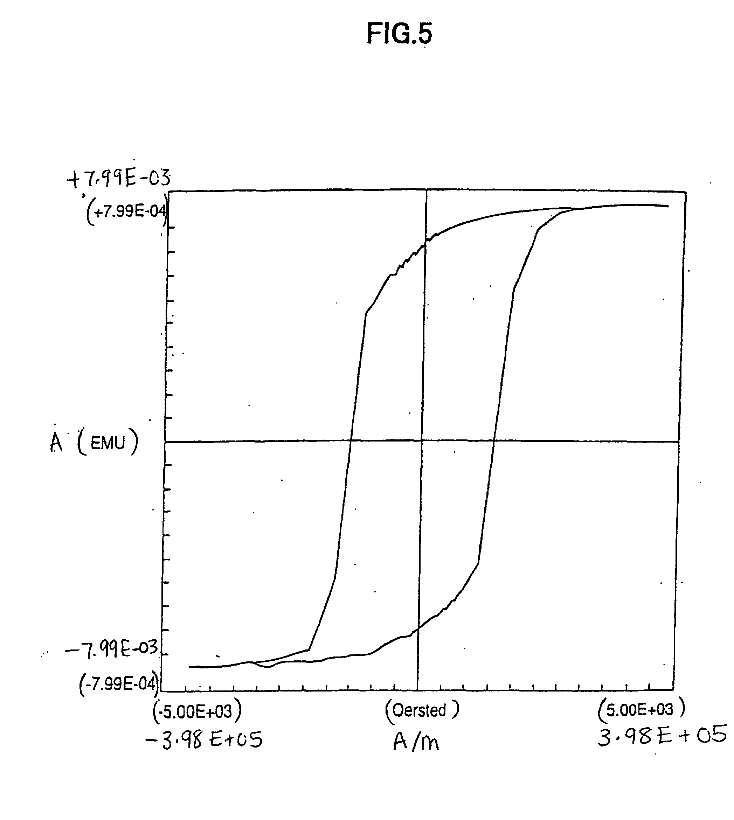

FIG. 5 is a diagram showing an in-plane magnetization curve of two CoPt layers separated by a Ru layer having a thickness of 1.4 nm. In FIG. 5, the ordinate indicates the magnetization ( A ), and the abscissa indicates the magnetic field (A/m). As may be seen from FIG. 5, the magnetizations of the two CoPt layers are parallel.

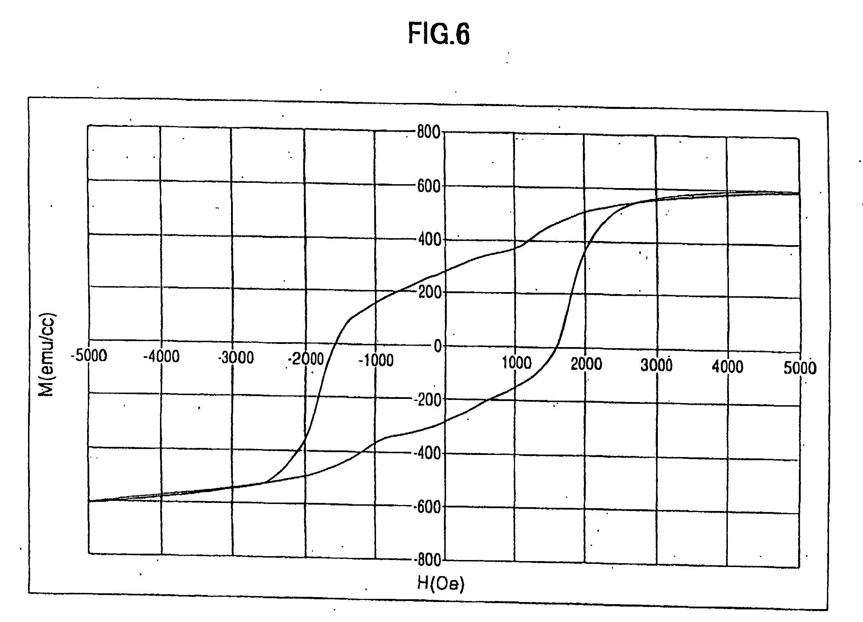

FIG. 6 is a diagram showing an in-plane magnetization curve for two CoCrPt layers separated by a Ru having a thickness of 0.8 nm, as in the case of the second embodiment of the magnetic recording medium. In FIG. 6, the ordinate indicates the magnetization (emu/cc), and the abscissa indicates the field (Oe). As may be seen from FIG. 6, the loop shows shifts near the field which indicate the antiparallel coupling. In FIG. 6 and following Figures 1emu/cc = 1.0 E+07 Am⁻³ and 10e = 79.58 A/m.

From FIGS. 3 and 4, it may be seen that the antiparallel coupling can be obtained by the provision of the exchange layer structure. In addition, it may be seen by comparing FIG. 5 with FIGS. 4 and 6 that the non-magnetic coupling layer 8 is desirably in the range of 0.4 to 1.0 nm in order to achieve the antiparallel coupling.

Therefore, according to the first and second embodiments of the magnetic recording medium, it is possible to effectively increase the apparent grain volume of the magnetic layer by the exchange coupling provided between the magnetic layer and the ferromagnetic layer via the non-magnetic coupling layer, without sacrificing the resolution. In other words, the apparent thickness of the magnetic layer is increased with regard to the grain volume of the magnetic layer so that a thermally stable medium can be obtained, and in addition, the effective thickness of the magnetic layer is maintained since cancellation of signals especially from the bottom layers is achieved. This allows higher linear density recording that is otherwise not possible for thick media. As a result, it is possible to obtain a magnetic recording medium with reduced medium noise and thermally stable performance.

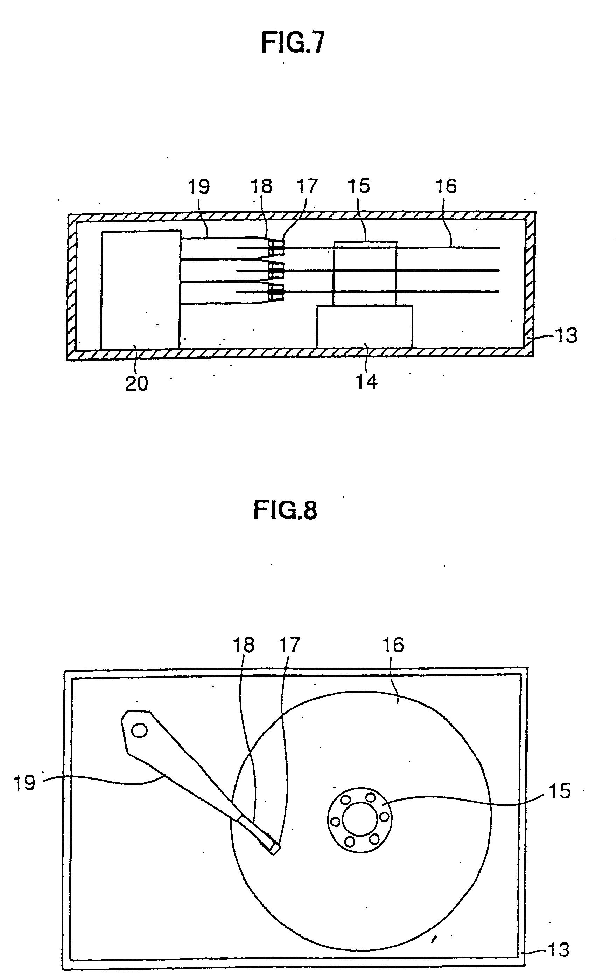

Next, a description will be given of a magnetic storage apparatus for use with an embodiment of the present invention, by referring to FIGS. 7 and 8. FIG. 7 is a cross sectional view showing an important part of the magnetic storage apparatus, and FIG. 8 is a plan view showing the important part of the magnetic storage apparatus.

As shown in FIGS. 7 and 8, the magnetic storage apparatus generally includes a housing 13. A motor 14, a hub 15, a plurality of magnetic recording media 16, a plurality of recording and reproducing heads 17, a plurality of suspensions 18, a plurality of arms 19, and an actuator unit 20 are provided within the housing 13. The magnetic recording media 16 are mounted on the hub 15 which is rotated by the motor 14. The recording and reproducing head 17 is made up of a reproducing head such as a MR or GMR head, and a recording head such as an inductive head. Each recording and reproducing head 17 is mounted on the tip end of a corresponding arm 19 via the suspension 18. The arms 19 are moved by the actuator unit 20. The basic construction of this magnetic storage apparatus is known, and a detailed description thereof will be omitted in this specification.

This magnetic storage apparatus is characterized by the magnetic recording media 16. Each magnetic recording medium 16 has the structure of the first or second embodiment of the magnetic recording medium described above in conjunction with FIGS. 1 and 2. Of course, the number of magnetic recording media 16 is not limited to three, and only one, two or four or more magnetic recording media 16 may be provided. Further, each magnetic recording medium 16 may have the structure of any of the embodiments of the magnetic recording medium which will be described later.

The basic construction of the magnetic storage unit is not limited to that shown in FIGS. 7 and 8. In addition, the magnetic recording medium used in the present invention is not limited to a magnetic disk.

Next, a description will be given of further features of the present invention, in comparison with a conventional magnetic recording medium having no exchange layer structure. In the following description, the ferromagnetic layer of the exchange layer structure and the magnetic layer will also be referred to as ferromagnetic layers forming a magnetic layer structure.

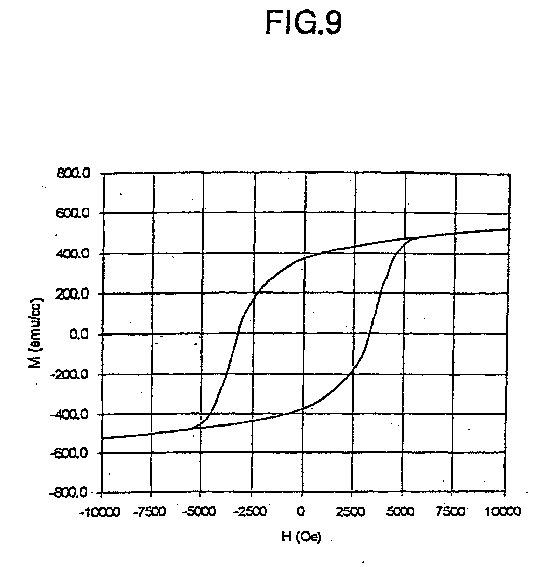

FIG. 9 is a diagram showing an in-plane magnetization curve for a magnetic recording medium having a single layer of CoCrPtB grown on a NiAl layer on glass. In FIG. 9, the ordinate indicates the magnetization M (emu/cc), and the abscissa indicates the magnetic field H (Oe). Similar M-H curves are observed for a single Co-based layer grown on a Cr underlayer on NiP coated Al substrate or NiP coated glass substrate.

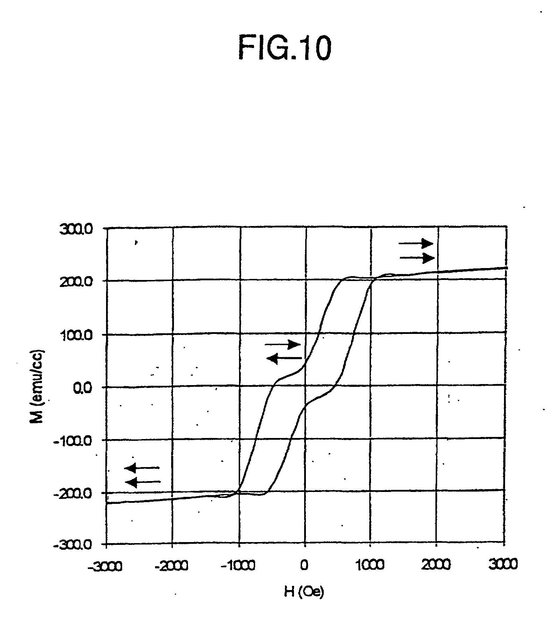

On the other hand, FIG. 10 is a diagram showing an in-plane magnetization curve for a magnetic recording medium having two ferromagnetic layers of CoCrPtB separated by a Ru layer having a thickness of 0.8 nm, sputtered on a NiP coated Al-Mg substrate. In FIG. 10, the ordinate indicates the magnetization M (emu/cc), and the abscissa indicates the magnetic field H (Oe). As may be seen from FIG. 10, the magnetization M abruptly decreases when the magnetic field H is around H=500 Oe which indicates an exchange coupling field of approximately 1000 Oe. The reduced magnetization M at H=0 evidences the anti-parallel coupling.

The optimum Ru thickness for the negative coupling can be determined not only by magnetometry but also by spin stand methods. The reproduced signal at low densities gives an indication of a remanent magnetization and thickness product Mrδ, where Mr denotes the remanent magnetization and δ denotes the effective thickness of the CoCrPtB layer, that is the ferromagnetic layer of the magnetic layer structure. If the Ru thickness is varied while the thicknesses of the two CoCrPtB layers are maintained constant, the reproduced signal shows a dip at the optimum Ru thickness. The optimum Ru thickness may depend on the magnetic materials and the processing used to form the ferromagnetic layers of the magnetic layer structure. For CoCrPt-based alloys manufactured above 150°C, the antiparallel coupling is induced for the Ru thickness in a range of approximately 0.4 to 1.0 nm.

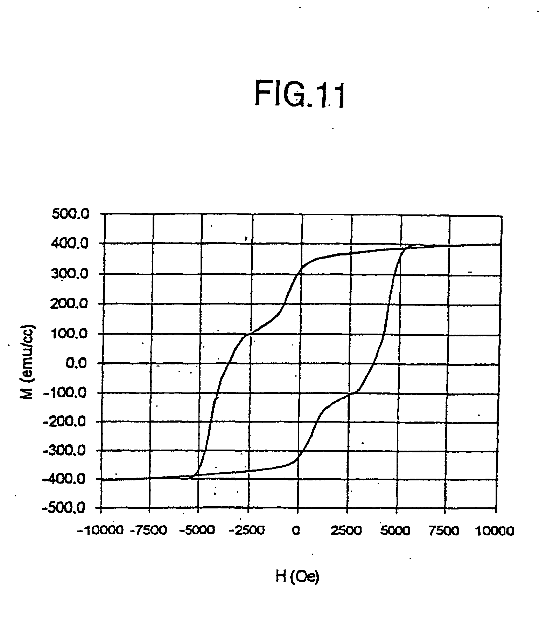

FIG. 11 is a diagram showing an in-plane magnetization curve for a magnetic recording medium having two ferromagnetic layers of CoCrPtB separated by a Ru layer, on a NiP coated Al substrate. In FIG. 11, the ordinate indicates the magnetization M (emu/cc), and the abscissa indicates the magnetic field H (Oe). FIG. 11 shows a case where a first CoCrPtB layer closer to the substrate is 8 nm thick, the Ru layer is 0.8 nm thick, and a second CoCrPtB layer further away from the substrate is 20 nm thick.

In this case, antiparallel coupling is observed but at higher negative magnetic fields. Unless the demagnetizing fields inside bits are very high, the antiparallel coupling is not completely achieved and very high reproduced signals are observed as the magnetizations in both the first and second CoCrPtB layers point in essentially the same direction. It is therefore necessary to reduce the coercivity He of the first CoCrPtB layer by reducing the thickness thereof or, by use of compositions which result in a lower coercivity Hc. For CoCrPt-based materials, the latter is usually achieved by increasing the Cr content and/or reducing the Pt content.

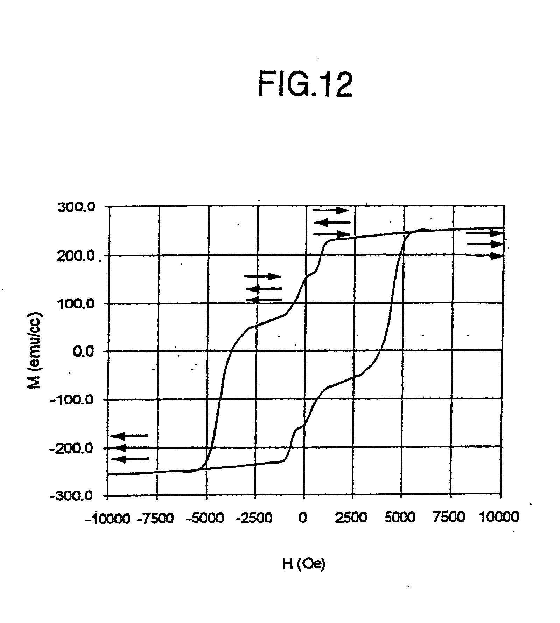

FIG. 12 is a diagram showing an in-plane magnetization curve for a magnetic recording medium having three ferromagnetic layers of CoCrPtB separated by a Ru layer between each two adjacent CoCrPtB layers, on a NiP coated Al substrate. In FIG. 12, the ordinate indicates the magnetization M (emu/cc), and the abscissa indicates the magnetic field H (Oe). FIG. 12 shows a case where first and second CoCrPtB layers closer to the substrate are 6 nm thick, a top third CoCrPtB layer is 20 nm thick, and the Ru layers between the first and second CoCrPtB layers and between the second and third CoCrPtB layers respectively are 0.8 nm thick. In this case, the magnetization M drops when the magnetic field H is H=500 Oe, which indicates that one of the first through third CoCrPtB layers reversed magnetization at positive fields. It is likely the middle second CoCrPtB layer which reversed magnetization since this middle second CoCrPtB layer is subject to a stronger reversing field due to the two interfaces. The interlayer interaction is therefore 500 Oe greater than the coercivity Hc of the middle second CoCrPtB layer.

However, at low negative magnetic fields, the bottom first CoCrPtB layer starts reversing magnetization, such that at approximately -1000 Oe, the magnetization of only the top third CoCrPtB layer is not reversed. Preferably, the bottom first CoCrPtB layer should not reverse magnetization at magnetic fields which are low compared to the demagnetizing fields inside bits, and this may be achieved for example by choosing the proper thickness and/or composition for the bottom first CoCrPtB layer. A magnetic recording medium which has these three ferromagnetic layers tends to have read-write performance which is better than a magnetic recording medium which only has a single ferromagnetic (magnetic) layer with no exchange coupling. There is a possibility that the reproduced signal will be reduced with time as more grains change layer magnetization configuration from parallel to antiparallel which is more stable. However, a solitary wave media signal-to-noise ratio (SNR) Siso/Nm of the magnetic recording medium is expected to be maintained since the medium noise level is also correspondingly reduced. Hence, the bit error rate (BER) which is intimately related to the isolated wave medium SNR Siso/Nm will not be degraded.

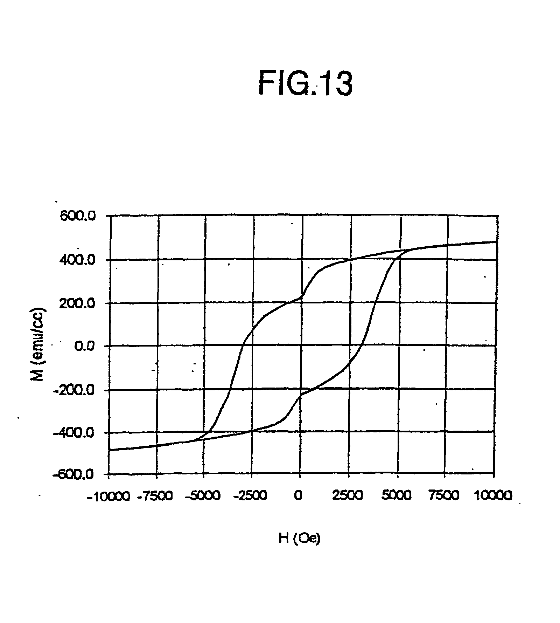

FIG. 13 is a diagram showing an in-plane magnetization curve for a magnetic recording medium having two negatively coupled ferromagnetic layers of CoCrPtB separated by a Ru layer, on a NiAl coated glass substrate. In FIG. 13, the ordinate indicates the magnetization M (emu/cc), and the abscissa indicates the magnetic field H (Oe). As shown in FIG. 13, the bottom CoCrPtB layer closer to the substrate reverses magnetization even before the magnetic field H becomes H=0 Oe.

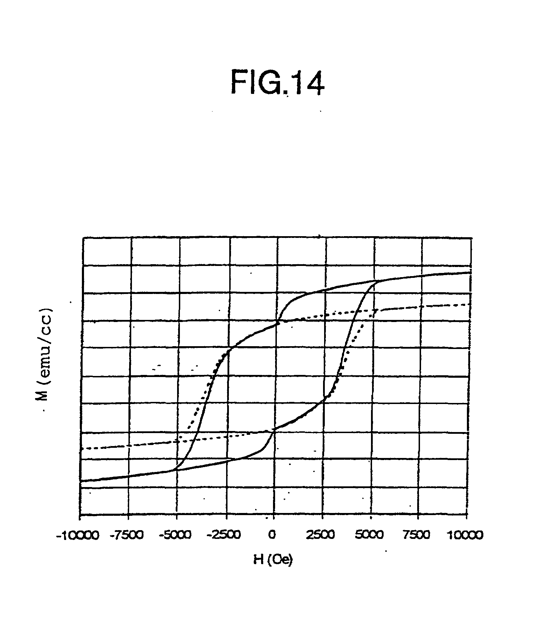

FIG. 14 is a diagram showing an in-plane magnetization curve shown in FIG. 13 in comparison with a magnetic recording medium having a single ferromagnetic layer of CoCrPtB on a NiAl coated glass substrate fabricated similarly to the recording medium having the two negatively coupled ferromagnetic layers. In FIG. 14, the ordinate indicates the magnetization M (emu/cc), and the abscissa indicates the magnetic field H (Oe). In FIG. 14, the in-plane magnetization curve shown in FIG. 13 is indicated by.a solid line, and an in-plane magnetization curve for the recording medium with the single ferromagnetic layer is indicated by a dashed line. In FIG. 14, the saturation magnetization is normalized so as to illustrate the similarity of the M-H curve portions relevant to the magnetic recording.

When a head saturates a portion of the magnetic recording medium having the two negatively coupled ferromagnetic layers, the magnetization of both the two ferromagnetic layers is in the head field direction, but as soon as the head field is no longer applied, the bottom ferromagnetic layer reverses magnetization and the situation inside a bit would be similar to that of the magnetic recording medium having the single ferromagnetic layer. A read head only senses the resultant magnetization. A person skilled in the art can therefore tune the thickness, composition and processing of the ferromagnetic layers, so that the magnetic recording medium behaves similarly to the conventional magnetic recording medium but with an enhanced thermal stability.

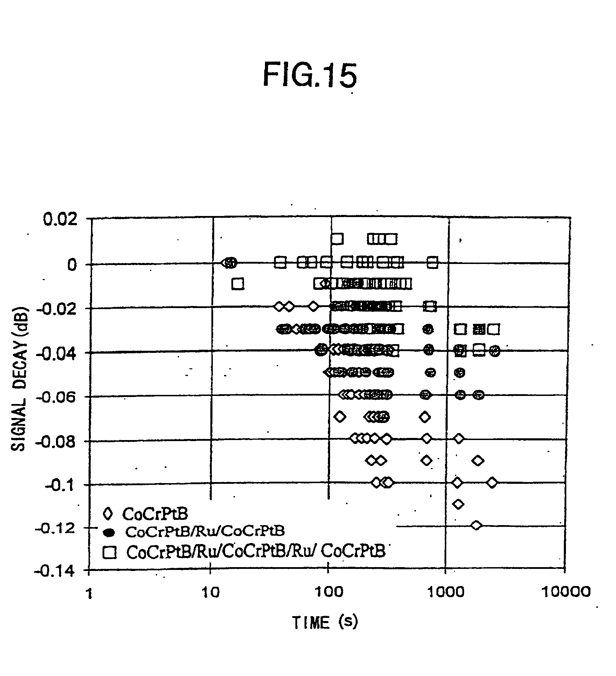

FIG. 15 is a diagram showing signal decays of magnetic recording media having two and three ferromagnetic layers, in comparison with a signal decay of a magnetic recording medium having the single ferromagnetic layer. In FIG. 15, the ordinate indicates the signal decay (dB) of the reproduced signal for 207 kfci bits, and the abscissa indicates the time (s). In FIG. 15, ◇ indicates the data of the magnetic recording medium having the single CoCrPtB layer which is 10 nm thick, ● indicates the data of the magnetic recording medium having the bottom first CoCrPtB layer which is 10 nm thick, the Ru layer which is 0.8 nm thick and the top second CoCrPtB layer which is 4 nm thick, and □ indicates the data of the magnetic recording medium having the bottom first CoCrPtB layer which is 10 nm thick, the first Ru layer which is 0.8 nm thick, the middle CoCrPtB layer which is 4 nm thick, the second Ru layer which is 0.8 nm thick and the top third CoCrPtB layer which is 4 nm thick. The ferromagnetic layer compositions are all the same, and the coercivity He measured with a Kerr magnetometer are approximately 2700 Oe (214.8 kA/m) and are similar. As may be seen from FIG. 15, the. magnetic recording media having two ferromagnetic layers and three ferromagnetic layers show more thermally stable characteristics as the effective volume is increased, as compared to the magnetic recording medium having the single ferromagnetic layer and no exchange coupling.

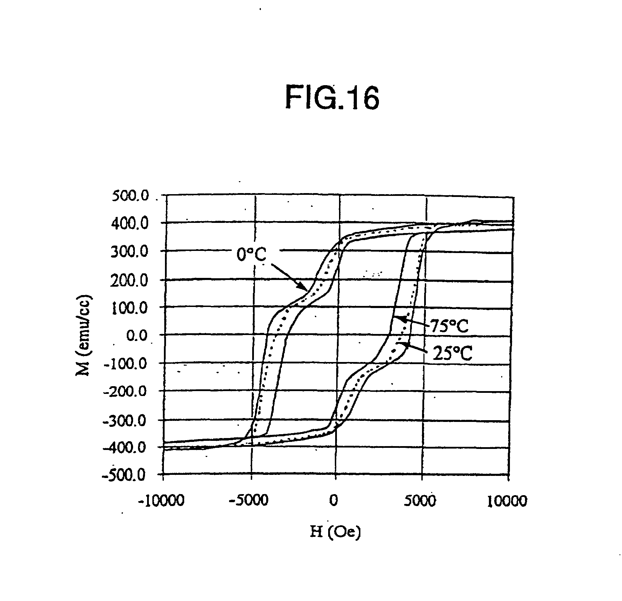

FIG. 16 is a diagram showing M-H curves of a magnetic recording medium having the two negatively coupled ferromagnetic layers at different temperatures. In FIG. 16, the ordinate indicates the magnetization M (emu/cc), the abscissa indicates the magnetic field H (Oe), and the data are shown for three different temperatures which are 0°C, 25°C and 75°C. A strong negative coupling is observed over a wide temperature range, and covers the range useful for magnetic recording media such as disks and tapes.

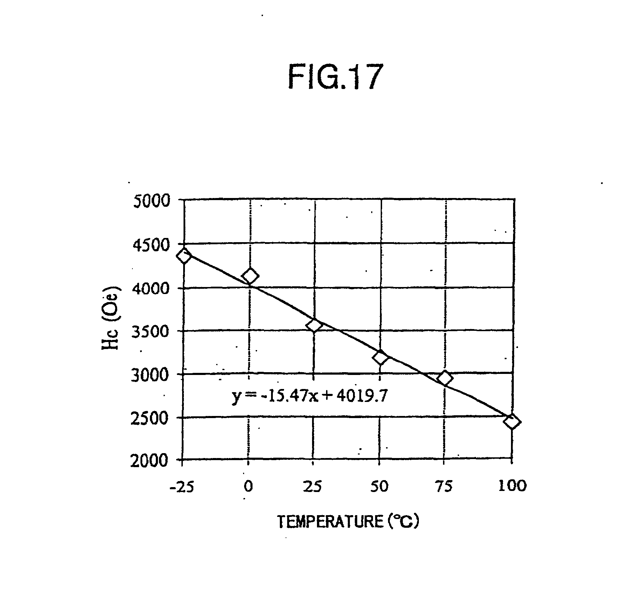

FIG. 17 is a diagram showing the temperature dependence of the coercivity for the magnetic recording medium having the characteristics shown in FIG. 16. In FIG. 17, the ordinate indicates the coercivity Hc (Oe), and the abscissa indicates the measured temperature (°C). In addition, y=Hc and x=temperature in the expression y=-15.47x+4019.7. The coercivity changes with temperature dHc/dT=15.5 Oe/°C and is less than that of the magnetic recording medium having the single ferromagnetic layer. A typical dHc/dT for the magnetic recording medium having the single ferromagnetic layer is 16 to 17 Oe/°C. Accordingly, it may be clearly seen that the improved dHc/dT value obtained for the magnetic recording medium having the two negatively coupled ferromagnetic layers primarily arises from the increased effective volume.

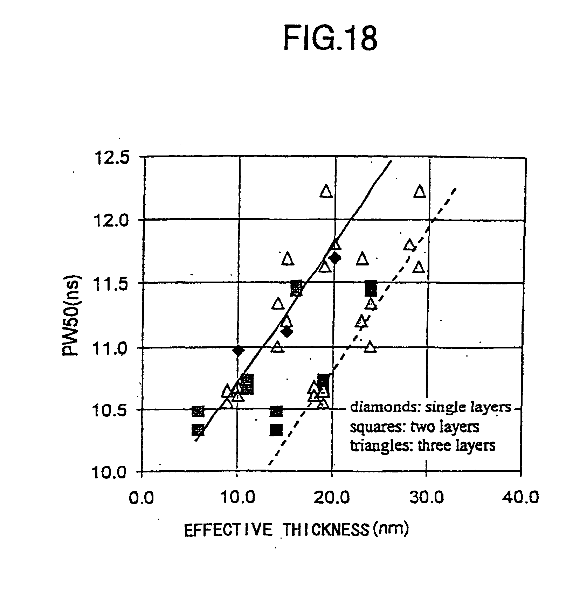

FIG. 18 is a diagram showing the PW50 dependence on the effective and total ferromagnetic layer thickness of the magnetic recording media having two and three ferromagnetic layers, in comparison with the PW50 dependence on the effective and total ferromagnetic layer thickness of the magnetic recording medium having the single. ferromagnetic layer. In FIG. 18, the ordinate indicates the PW50 (ns), and the abscissa indicates the effective and total ferromagnetic layer thickness (nm). In FIG. 18, ◆ indicates the data of the magnetic recording medium having the single ferromagnetic layer, ■ indicates the data of the magnetic recording medium having two exchange-coupled ferromagnetic layers, and Δ indicates the data of the magnetic recording medium having three exchange-coupled ferromagnetic layers. The thickness and composition of the ferromagnetic layers are basically the same as those used to obtain the data shown in FIG. 15. For the data on the left side along the solid line, the thickness used is the effective thickness, that is magnetization cancellation due to an antiparallel configuration is assumed. Significant correlation is observed validating the assumption. When the total thickness of the ferromagnetic layer or layers is used, the data shifts to the right along the dotted line, which give unreasonably small PW50 values for the thicknesses involved when compared to those of the magnetic recording medium having the single ferromagnetic layer.

Therefore, although the writing resolution may be degraded due to the increased media thickness, the reading resolution is not, since cancellation of the signals from the lower layers occurs which may also explain the improved isolated wave medium SNR Siso/Nm over the magnetic recording medium having the single ferromagnetic layer. The isolated wave medium SNR Siso/Nm of the magnetic recording medium having the two exchange-coupled ferromagnetic layers and very low effective Mrδ is especially improved over that of the magnetic recording medium having the single ferromagnetic layer. Such a very low effective Mrδ can be achieved when the two ferromagnetic layers have almost the same Mrδ. For the magnetic recording medium having the three exchange-coupled ferromagnetic layers, the performance is enhanced when the sum of the thicknesses of the bottom first and middle second ferromagnetic layers is not so different from the thickness of the top third ferromagnetic layer. This phenomenon is consistent with a similar phenomenon which occurs in double uncoupled layers since the best thickness combination of the double uncoupled layers is when both layers are of the same thickness.

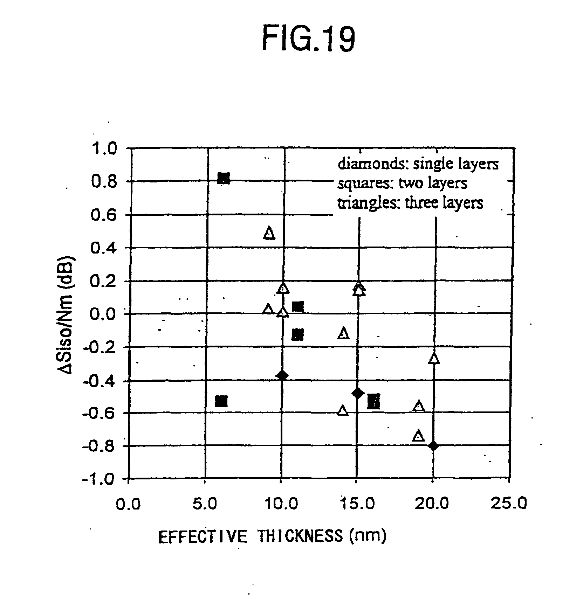

FIG. 19 is a diagram showing the effective thickness dependence of the change in isolated wave medium SNR. In FIG. 19, the ordinate indicates the change ΔSiso/Nm (dB) of the isolated wave medium SNR Siso/Nm, and the abscissa indicates the effective thickness (nm) of the ferromagnetic layers. In FIG. 19, the same symbols ◆, ■ and Δ are used to indicate the data of the three different magnetic recording media as in FIG. 18. It may be seen from FIG. 19 that good isolated wave medium SNR Siso/Nm is especially observed for the magnetic recording medium having the two exchange-coupled ferromagnetic layers with low Mrδ. Although the total thickness of the ferromagnetic layers in this case becomes greater than that of the magnetic recording medium having the single ferromagnetic layer, the read-write performance is hardly degraded, and in some cases even improved.

The present inventors have also found that, when at least one of the ferromagnetic layers of the magnetic layer structure is made up of a plurality of ferromagnetic layers which are in contact with each other and ferromagnetically coupled, a good performance is obtained especially when the lower ferromagnetic layer is Cr-rich such that the Cr content is 23 at% or greater, and the Cr content of the upper ferromagnetic layer is less. This indicates the crucial role of the lower ferromagnetic layer. According to the experiments conducted by the present inventors, it was found that the noise arising from imperfections in the lower ferromagnetic layer is effectively reduced due to cancellation from the succeeding ferromagnetic layers. In other words, it may be regarded that the lower layers form a large source of noise, but this embodiment can improve the SNR because the signals from the lower layers are cancelled such that most of the signals and thus also noise come from the upper layers.

A third embodiment of the magnetic recording medium according to the present invention is based on the above findings.

In other words, in this third embodiment, the magnetic recording medium comprises a substrate, an underlayer disposed above the substrate, and a magnetic layer structure including at least a bottom ferromagnetic layer provided on the underlayer and having a remanent magnetization and thickness product Mrᵢδᵢ, and a top ferromagnetic layer disposed above the bottom ferromagnetic layer and having a remanent magnetization and thickness product Mrⱼδⱼ, wherein a relationship Mrδ≒Σ(Mrᵢδᵢ-Mrⱼδⱼ) is satisfied, where Mrδ denotes a total remanent magnetization and thickness product of the magnetic layer structure, so that magnetization directions of adjacent ferromagnetic layers in the magnetic layer structure are closely antiparallel. δ,δᵢ, and δⱼ may be regarded as effective thicknesses.

The magnetic recording medium further comprises a non-magnetic coupling layer interposed between two adjacent ferromagnetic layers of the magnetic layer structure, so that antiparallel magnetic interaction is induced thereby. This non-magnetic coupling layer may be made essentially of Ru with a thickness of approximately 0.4 to 1.0 nm. This non-magnetic coupling layer may be made of a material selected from a group of Ru, Rh, Ir, Cu, Cr and alloys thereof.

In the magnetic recording medium, each of the ferromagnetic layers of the magnetic layer structure may be made of a material selected from a group of Co, Fe, Ni, CoCrTa, CoCrPt and CoCrPt-M, where M=B, Cu, Mo, Nb, Ta, W and alloys thereof. In addition, at least one of the ferromagnetic layers of the magnetic layer structure may made up of a plurality of ferromagnetic layers which are in contact with each other and ferromagnetically coupled. The Mrⱼδⱼ of the top ferromagnetic layer may be largest among products of remanent magnetization and thickness of other ferromagnetic layers of the magnetic layer structure. Furthermore, the ferromagnetic layers of the magnetic layer structure may have mutually different compositions.

According to this third embodiment of the magnetic recording medium, the thermal stability and the isolated wave medium SNR Siso/Nm respectively are larger than those obtained by a magnetic recording medium with similar Mrδ but having single or multiple magnetic layers of closely parallel magnetizations. Further, the PW50 value is smaller than that obtained by a magnetic recording medium having a similar total magnetic layer thickness.

In addition, the dHc/dT value obtained in this third embodiment of the magnetic recording medium is smaller than that of the magnetic recording medium with similar Mδ but having single or multiple magnetic layers of closely parallel magnetizations.

Furthermore, it was confirmed from data such as those shown in FIGS. 16 and 17 that the ferromagnetic coupling obtained in this third embodiment of the magnetic recording medium is sufficiently strong and closely antiparallel in a temperature range of approximately -10°C to 150°C.

Of course, the magnetic storage apparatus described above may also use one or more magnetic recording media according to the third embodiment of the magnetic recording medium described above.

Next, a description will be given of an embodiment of a recording method according to the present invention. This embodiment of the recording method uses any one of the embodiments of the magnetic recording medium described above, to magnetically record information on the magnetic recording medium in the embodiment of the magnetic storage apparatus described above.

More particularly, the method of magnetically recording information on the magnetic recording medium comprises a step of switching magnetization direction of at least one of the ferromagnetic layers which form the magnetic layer structure of the magnetic recording medium and have antiparallel magnetization directions, as in the third embodiment of the magnetic recording medium. According to this embodiment, it is possible to make a high-density recording with improved thermal stability.

Next, a description will be given of an embodiment of a method of producing a magnetic recording medium embodying the present invention.

When producing any one of the embodiments of the magnetic recording medium described above, the crystal properties and crystal orientation of the layers forming the magnetic recording medium must be appropriately controlled. The non-magnetic coupling layer in particular is extremely thin compared to the other layers such as the underlayer, and it is desirable that such a thin non-magnetic coupling layer is uniformly grown. Furthermore, in order to achieve the proper ferromagnetic coupling, the interfaces between two adjacent layers must be extremely clean and include no notable abnormalities.

Accordingly, in this medium producing method, the layers of the magnetic. recording medium are formed sequentially (or continuously), preferably by sequential (or continuous) sputtering, since the sputtering enables an extremely thin and uniform layer to be grown as compared to other layer formation techniques. In addition, it is possible to minimize contamination between the adjacent layers by employing the sequential (or continuous) sputtering.

Furthermore, even in the case of the sputtering, it is difficult to guarantee uniform growth of a thin film having a thickness on the order of approximately 1 nm or less. Based on experiments conducted by the present inventors, the sputtering rate is preferably set to 0.35 nm/s or less in order to guarantee the uniformity of the grown thin film.

Moreover, when the gas pressure during the sputtering is too high, the layers and the interface between the adjacent layers are easily contaminated. On the other hand, when the gas pressure during the sputtering is too low, unstable plasma causes non-uniform growth of the thin film. According to experiments conducted by the present inventors, the gas pressure during the sputtering is preferably set on the order of approximately 5 mTorr.

In addition, the substrate temperature during the sputtering also needs to be optimized. A substrate temperature which is too high may cause the substrate to warp, thereby causing non-uniform growth of particularly the thin non-magnetic coupling layer. On the other hand, a substrate temperature which is too low may cause layers having unsatisfactory crystal properties to be grown. According to experiments conducted by the present inventors, the substrate temperature prior to the sputtering is set in a range of approximately 100°C to 300°C.

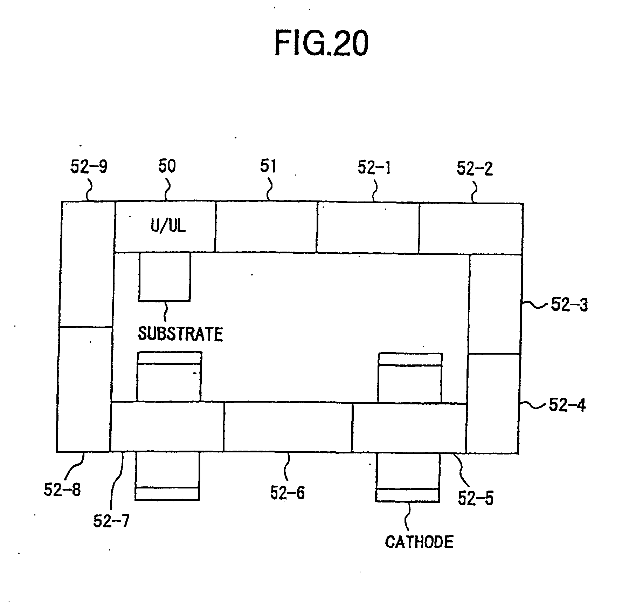

FIG. 20 is a diagram showing the general construction of a magnetic recording medium producing apparatus which is used in this medium producing method. The apparatus shown in FIG. 20 generally includes a loading and unloading unit 50, a heating chamber 51, and a plurality of sputtering chambers 52-1 through 52-n, where n depends on the layer structure of the magnetic recording medium which is produced. The last sputtering chamber 52-n connects to the loading and unloading unit 50 so as to enable unloading of the produced magnetic recording medium. For the sake of convenience, it is assumed that n=9.

First, a substrate is loaded into the loading and unloading unit 50 and heated to a substrate temperature in a range of approximately 100°C to 300°C within the heating chamber 51. Then, sequential (or continuous) DC sputtering is successively carried out in the sputtering chambers 52-1 through 52-9 to form on the substrate a NiAl layer which is 40 nm thick, a CrMo underlayer which is 20 nm thick, a CoCr intermediate layer which is 1.5 nm thick, a CoCrPtB ferromagnetic layer which is 4 nm thick, a Ru non-magnetic coupling layer which is 0.8 nm thick, a CoCrPtB ferromagnetic layer which is 4 nm thick, a Ru non-magnetic coupling layer which is 0.8 nm thick, a CoCrPtB magnetic layer, and a C protection layer.

The Ar gas pressure in the sputtering chambers 52-1 through 52-9 are set to approximately 5 mTorr. In addition, the sputtering rate is set approximately 0.35 nm/s or less and slower in the sputtering chambers 52-5 and 52-7 than in the other sputtering chambers. The slower sputtering rate can be achieved by increasing the distance between the target and the substrate by increasing the separation of the cathodes, as shown for the sputtering chamber 52-5 and 52-7.

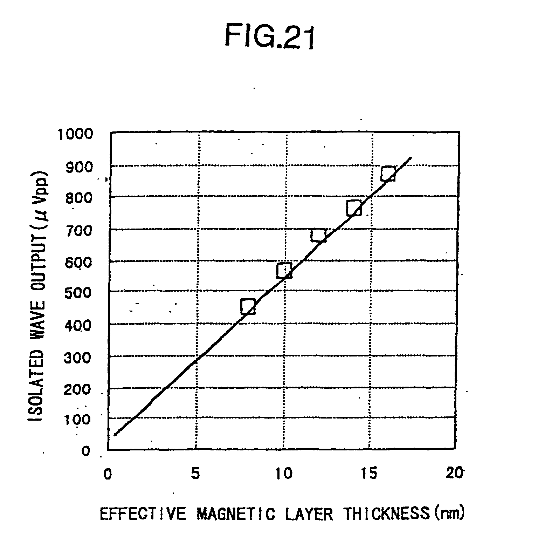

FIG. 21 is a diagram showing the dependence of isolated wave output on effective magnetic layer thickness. In FIG. 21, the ordinate indicates the isolated wave output (µVpp), and the abscissa indicates the effective magnetic layer thickness (nm). The data shown in FIG. 21 was obtained by writing signals on the produced magnetic recording medium and reading the written signal using a GMR head. It was confirmed that the isolated wave output is proportional to the effective magnetic layer thickness, verifying the antiparallel ferromagnetic coupling of the magnetic layer structure.

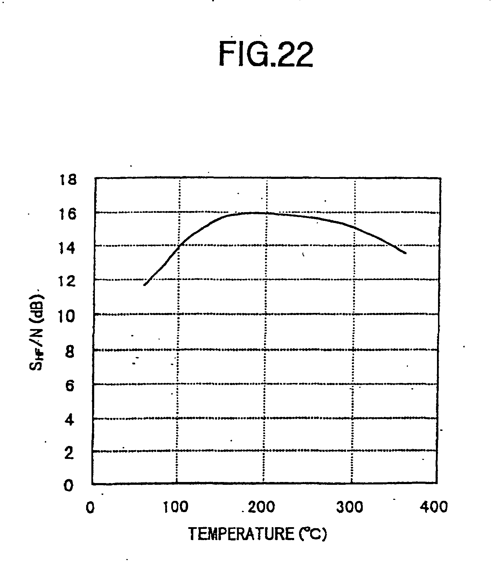

FIG. 22 is a diagram showing the temperature dependence of high-frequency SNR. In FIG. 22, the ordinate indicates the high-frequency SNR (dB), and the abscissa indicates the substrate temperature (°C) during the sputtering. It was confirmed that good properties of the grown layers are obtained, preferably when the substrate temperature is set in a range of approximately 100°C to 300°C.

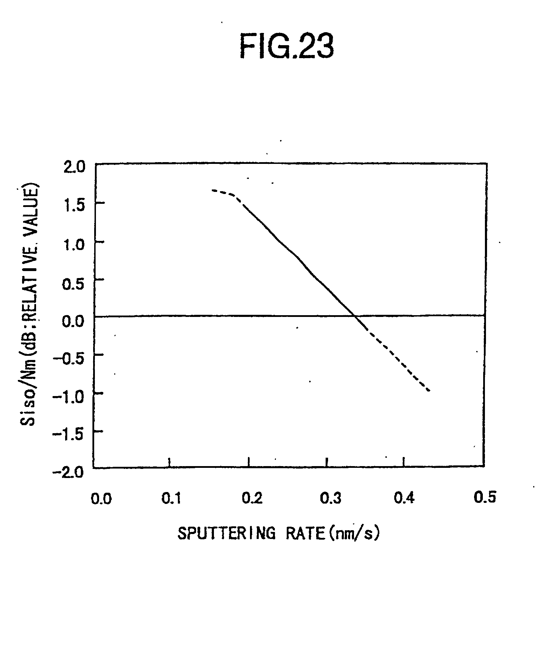

FIG. 23 is a diagram showing a relationship of the isolated wave medium SNR Siso/Nm and the sputtering rate of Ru. In FIG. 23, the ordinate indicates the isolated wave medium SNR Siso/Nm (dB, relative value), and the abscissa indicates the sputtering rate (nm/s). The data shown in FIG. 23 were obtained to confirm whether or not the ferromagnetic layer and the magnetic layer respectively provided under and above the Ru layer would form a norm magnetic coupling. For the sake of convenience, the data shown in FIG. 23 were obtained for a case where the Ru layer is formed to a thickness of 1.4 nm on the CCPB ferromagnetic layer, and the CCPB magnetic layer is formed on the Ru layer.

In FIG. 23, the isolated wave medium SNR Siso/Nm is indicated by a relative value with respect to a comparison model medium having no Ru layer. It may be seen from FIG. 23 that the isolated wave medium SNR Siso/Nm deteriorates as the sputtering rate of Ru increases. This indicates that the extremely thin Ru layer is not formed uniformly at high sputtering rates. FIG. 23 indicates that the isolated wave medium SNR Siso/Nm becomes poorer than that of the comparison model medium having no Ru layer, particularly when the sputtering rate of Ru becomes greater than 0.35 nm/s. Therefore, it was confirmed that the sputtering rate of Ru should be set to 0.35 nm/s or less in order to produce a magnetic recording medium having the high performance described above.

The magnetic recording medium may further comprise at least a first exchange layer structure and a second exchange layer structure provided between the first exchange layer structure and the magnetic layer, where the second exchange layer structure has a ferromagnetic layer with a magnetic anisotropy smaller than that of a ferromagnetic layer of the first exchange layer structure, and the first and second exchange layer structures have ferromagnetic layers with magnetization directions which are mutually antiparallel.

The magnetic recording medium may further comprise at least a first exchange layer structure and a second exchange layer structure provided between the first exchange layer structure and the magnetic layer, where the second exchange layer structure has a ferromagnetic layer with a remanent magnetization and thickness product smaller than that of a ferromagnetic layer of the first exchange layer structure, and the first and second exchange layer structures have ferromagnetic layers with magnetization directions which are mutually antiparallel.

In the magnetic recording medium having the exchange layer structure such as that of the first embodiment shown in FIG. 1, when Ru is used for the non-magnetic coupling layer 8 and a CoCr-based alloy is used for the magnetic layer 9, both of these layers 8 and 9 have the hcp structure. In order to increase both the coercivity and resolution of the magnetic recording medium, it is desirable that the c-axis of the hcp structure is parallel with respect to the surface of the substrate 1. In a case where a CoCr-based alloy is used for the ferromagnetic layer 7, the ferromagnetic layer 7 is grown epitaxially on the non-magnetic intermediate layer 6 which is made of an alloy having the hcp structure and oriented on the (002) face, and thus, the in-plane orientation of the c-axis of the ferromagnetic layer 7 is very satisfactory.

On the other hand, the Ru which is used for the non-magnetic coupling layer 8 has the hcp structure, similarly as in the case of the CoCr-based alloy, but the lattice constant of Ru is approximately 5% larger than the lattice constant of the CoCr-based alloy. For this reason, the epitaxial growth may be slightly obstructed due to the lattice mismatch between the ferromagnetic layer 7 and the non-magnetic coupling layer 8 or, between' the non-magnetic coupling layer 8 and the magnetic layer 9. If the epitaxial growth is slightly obstructed due to the lattice mismatch, the coercivity of the magnetic recording medium decreases, and the in-plane orientation of the c-axis of the CoCr-based alloy becomes unstable.

Next, a description will be given of an embodiment which can improve the epitaxial growth between the Ru and the CoCr-based alloy, simultaneously increase the coercivity of the magnetic recording medium and improve the in-plane orientation of the c-axis of the CoCr-based alloy, and improve mainly the recording resolution characteristic of the magnetic recording medium.

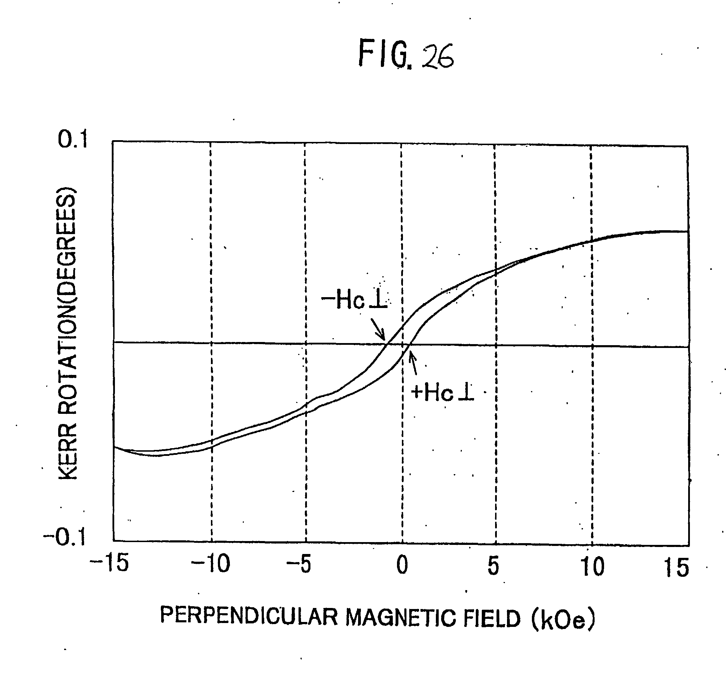

FIG. 26 is a cross sectional view showing an important part of a fourth embodiment of the magnetic recording medium according to the present invention.

The magnetic recording medium includes a non-magnetic substrate 216, a seed layer 217, an underlayer 218 made of a Cr-based alloy, a non-magnetic intermediate layer 219, a ferromagnetic layer 220, a non-magnetic coupling layer 221, a magnetic layer 222, a protection layer 223, and a lubricant layer 224 which are stacked in this order as shown in FIG. 26.

The non-magnetic substrate 216 is made of an Al alloy or glass, for example. The non-magnetic substrate 216 may or may not be mechanically textured. The seed layer 217 is made of NiP which is plated in a case where the non-magnetic substrate 216 is made of the Al alloy. The NiP seed layer 217 may or may not be mechanically textured. On the other hand, in a case where the non-magnetic substrate 216 is made of glass, the seed layer 217 is made of an intermetallic compound material having the B2 structure, such as NiAl and FeAl.

The non-magnetic intermediate layer 219 is provided to promote the epitaxial growth of the magnetic layer 222, reduction of the grain size distribution with of the magnetic layer 222, and the anisotropic axis (c-axis, axis of easy magnetization) orientation of the magnetic layer 222 along a plane parallel to the recording surface of the magnetic recording medium. The non-magnetic intermediate layer 219 is made of an alloy having the hcp structure, such as CoCr-M1, and has a thickness in a range of approximately 1 to 5 nm, where M1 = B, Mo, Bn, Ta, W or alloys thereof.

The ferromagnetic layer 220 is made of a material selected from a group of Co, Ni, Fe, Co-based alloys, Ni-based alloys, Fe-based alloys and the like. In other words, Co-based alloys including CoCrTa, CoCrPt and CoCrPt-M2 may be used for the ferromagnetic layer 220, where M2 = B, Mo, Nb, Ta, W or alloys thereof. The ferromagnetic layer 220 has a thickness in a range of approximately 2 to 10 nm.

The non-magnetic coupling layer 221 is made of an alloy having the hcp structure, such as Ru-M3, where M3 = Co, Cr, Fe, Ni, Mn or alloys thereof. For example, the non-magnetic coupling layer 221 has a thickness in a range of approximately 0.4 to 1.0 nm, and preferably in a range of approximately 0.6 to 0.8 nm. By setting the thickness of the non-magnetic coupling layer 221 within such a range, the magnetizations of the ferromagnetic layer 220 and the magnetic layer 222 become antiparallel. Accordingly, the ferromagnetic layer 220 and the non-magnetic coupling layer 219 form an exchange layer structure.

The magnetic layer 222 is made of a material selected from a group of Co and Co-based alloys including CoCrTa, CoCrPt, and CoCrPt-M4, where M4 = B, Mo, Nb, Ta, W or alloys thereof. The magnetic layer 222 has a thickness in a range of approximately 5 to 30 nm. Of course, the magnetic layer 222 is not limited to a single-layer structure, and a multi-layer structure may be used for the magnetic layer 222.

The protection layer 223 is made of C or diamond-like C (DLC). In addition, the lubricant layer 224 is made of an organic lubricant agent, in order to enable the magnetic recording medium to be used with a magnetic transducer such as a spin valve head. The protection layer 223 and the lubricant layer 224 form a protection layer structure of the magnetic recording medium.

As described above, the non-magnetic coupling layer 221 is made of an alloy Ru-M3, where M3 = Co, Cr, Fe, Ni, Mn or alloys thereof. In this embodiment, an amount of the element M3 added to the Ru is set within the following composition ranges so as to maintain a stable hcp structure. In the following composition ranges, the numerical values following the brackets respectively indicate the amount in atomic percent (at%).
Ru-Co(0 to 50 at%)
Ru-Cr(0 to 50 at%)
Ru-Fe(0 to 60 at%)
Ru-Ni(0 to 10 at%)
Ru-Mn(0 to 50 at%)

FIG. 27 is a diagram showing a magnetization curve which is obtained when pure Ru is used for the non-magnetic coupling layer 221 of the magnetic recording medium shown in FIG. 26. In FIG. 27, the ordinate indicates the magnetization M (arbitrary units), and the abscissa indicates the magnetic field H (kOe). The magnetization curve shown in FIG. 27 was measured by a vibrating sample type magnetometer while applying a magnetic field parallel to the sample surface, that is, parallel to the recording surface of the magnetic recording medium. The magnetization curve has a constricted portion because of the existence of a region where the ferromagnetic layer 220 and the magnetic layer 222 form an antiparallel coupling.

In addition, a magnetization curve which is obtained when a Ru-M3 alloy is used for the non-magnetic coupling layer 221 was also measured similarly to the above. In the case where the Ru-M3 alloy is used for the non-magnetic coupling layer 221, it was also confirmed that a constricted portion is formed in the magnetization curve, similarly as in the case shown in FIG. 27, due to the existence of the region where the ferromagnetic layer 220 and the magnetic layer 222 form the antiparallel coupling.

In the first and fourth quadrants in FIG. 27, a linear portion of the magnetization curve on the higher magnetic field side of the constricted portion is extrapolated to the magnetic field axis, and the intersection with the magnetic field axis is defined as an in-plane coercivity Hc//.

FIG. 28 is a diagram showing a magnetization curve which is measured by a vertical Kerr looper (or loop) while applying a magnetic field in a perpendicular direction with respect to the sample surface, with respect to the magnetic recording medium for which the data shown in FIG. 27 were measured. In FIG. 28, the ordinate indicates the Kerr rotation (degrees), and the abscissa indicates the perpendicular magnetic field (Oe). A definition of a perpendicular coercivity Hc⊥ is shown in FIG. 28.

The extent of the in-plane orientation of the axis of easy magnetization of the magnetic layer 222 can be evaluated by a ratio (Hc⊥)/(Hc//). The smaller this ratio (Hc⊥)/(Hc//), the better the in-plane orientation of the magnetic layer 222.

Measured results of the in-plane coercivity Hc// and the ratio (Hc⊥)/(Hc//) for various materials used for the non-magnetic coupling layer 221 are shown in the following. In the following, the in-plane coercivity Hc// of the various materials is indicated by a relative value relative to the in-plane coercivity Hc// = 1 for the case where pure Ru is used for the non-magnetic coupling layer 221.

| Non-Magnetic Coupling Layer 221 | Hc// (Relative Value) | (Hc⊥)/(Hc//) |
|---|---|---|
| Ru | 1 | 0.33 |
| Ru-Co(20at%) | 1.10 | 0.23 |
| Ru-Cr(20at%) | 1.05 | 0.25 |
| Ru-Fe(20at%) | 1.07 | 0.28 |
| Ru-Mn(20at%) | 0.96 | 0.30 |
| Ru-Ni(10at%) | 0.94 | 0.30 |

Therefore, it was confirmed that the ratios (Hc⊥)/(Hc//) for the cases where the Ru-M3 alloys are used for the non-magnetic coupling layer 221 are improved according to this embodiment, as compared to the case where pure Ru is used for the non-magnetic coupling layer 221. As a result, it was confirmed that the recording resolution is improved by approximately 1.5 to 2.5 % by the improved in-plane orientation of the magnetic layer 222.

A lattice mismatch of the intervals of the (002) faces of the hcp structure of the Ru used for the non-magnetic coupling layer 221 with respect to the magnetic layer 222 and the ferromagnetic layer 220 respectively disposed above and below the non-magnetic coupling layer 221 is normally approximately 5 % at the maximum and approximately 8 % in a worst case. But by the addition of the element M3 to the Ru, it was confirmed that the lattice mismatch can be reduced to approximately 6 % or less, and preferably approximately 2 % or less. Furthermore, the element M3 added to the Ru is preferably Co, Cr, Fe, Ni, Mn or alloys thereof, but it is of course possible to adjust the lattice mismatch by adding to the Ru a material selected from a group of Ir, Mo, Nb, Pt, Rh, Ta, Ti, V, W and alloys thereof.

Of course, this embodiment may be applied similarly to the construction of the second embodiment of the magnetic recording medium described above.

## Claims

1. A magnetic recording medium **characterized by**:
at least one exchange layer structure (7, 8; 220, 221) comprising a first layer (7; 220) of ferromagnetic material and a second layer (8; 221) forming a non-magnetic coupling layer provided on said first layer (7; 220); and
a third layer (9; 222) of magnetic material formed on said exchange layer structure (7, 8; 220, 221) above said second layer (8; 221);
said first layer (7; 220) and said third layer (9; 222) being exchange-coupled and having antiparallel magnetizations.

2. The magnetic recording medium as claimed in claim 1, wherein said first layer (7) is made of a material selected from a group consisting of Co, Ni, Fe, Ni-based alloys, Fe-based alloys, and Co-based alloys including CoCrTa, CoCrPt and CoCrPt-M, where M = B, Mo, Nb, Ta, W, Cu or alloys thereof.

3. The magnetic recording medium as claimed in claim 1 or 2, wherein said second layer (8) is made of a material selected from a group consisting of Ru, Rh, Ir, Ru-based alloys, Rh-based alloys, and Ir-based alloys.

4. The magnetic recording medium as claimed in any preceding claim, wherein said second layer (8) has a thickness in a range of 0.4 to 1.0nm.

5. The magnetic recording medium as claimed in any preceding claim, wherein said third layer (9) is made of a material selected from a group consisting of Co, and Co-based alloys including CoCrTa, CoCrPt and CoCrPt-M, where M = B, Mo, Nb, Ta, W, Cu or alloys thereof.

6. The magnetic recording medium as claimed in any preceding claim, further **characterized by**:
a substrate (1); and
an underlayer (5) provided above said substrate (1);
said exchange layer structure (7, 8) being provided above said underlayer (5).

7. The magnetic recording medium as claimed in claim 6, further **characterized by**:
a fourth layer (6) forming a non-magnetic intermediate layer interposed between said underlayer (5) and said exchange layer structure (7, 8);
said fourth layer (6) having a hcp structure alloy selected from a group consisting of CoCr-M, where M = B, Mo, Nb, Ta, W or alloys thereof, and having a thickness in a range of 1 to 5nm.

8. The magnetic recording medium as claimed in any preceding claim, further **characterized by** at least a first exchange layer structure and a second exchange layer structure interposed between said first exchange layer structure and said third layer, wherein the first layer of said second exchange layer structure has a magnetic anisotropy lower than that of the first layer of said first exchange layer structure, and magnetizations of the first layers of said first and second exchange layer structures are antiparallel.

9. The magnetic recording medium as claimed in any preceding claim, further **characterized by** at least a first exchange layer structure and a second exchange layer structure interposed between said first exchange layer structure and said third layer, wherein a remanent magnetization and thickness product of the first layer of said second exchange layer structure is smaller than that of the first layer of said first exchange layer structure, and magnetizations of the first layers of said first and second exchange layer structures are antiparallel.

10. The magnetic recording medium as claimed in claim 1, wherein said second layer (221) is made of a Ru-M3 alloy, where M3 is an added element or alloy, and a lattice mismatch between said second layer (221) and said third layer (222) and said first layer (220) respectively disposed above and below said second layer (221) is adjusted to approximately 6% or less by addition of M3.

11. The magnetic recording medium as claimed in claim 1, wherein said second layer (221) is made of a Ru-M3 alloy, where M3 = Co, Cr, Fe, Ni, Mn or alloys thereof.

12. The magnetic recording medium as claimed in claim 10 or 11, wherein an amount of the element M3 added to Ru is 50 at% or less for Co, 50 at% or less for Cr, 60 at% or less for Fe, 10 at% or less for Ni, and 50 at% or less for Mn.

13. A magnetic storage apparatus comprising at least one magnetic recording medium (16) and means (17) for .recording information on and/or reproducing information from said at least one magnetic recording medium (16), **characterised in that** said at least one magnetic recording medium (16) comprises:
at least one exchange layer structure (7, 8; 220, 221) comprising a first layer (7; 220) of ferromagnetic material and a second layer (8; 221) forming a non-magnetic coupling layer provided on said first layer (7; 220); and
a third layer (9; 222) of magnetic material formed on said exchange layer structure (7, 8; 220, 221) above said second layer (8; 221);
said first layer (7; 220) and said third layer (9; 222) being exchange-coupled and having antiparallel magnetizations.

## Patentansprüche

1. Magnetisches Aufzeichnungsmedium, **gekennzeichnet durch**:
wenigstens eine Austauschschichtstruktur (7, 8; 220, 221), die eine erste Schicht (7; 220) aus ferromagnetischem Material umfaßt, und eine zweite Schicht (8; 221), die eine nichtmagnetische Kopplungsschicht bildet und auf der ersten Schicht (7; 220) vorgesehen ist; und
eine dritte Schicht (9; 222) aus magnetischem Material, die auf der Austauschschichtstruktur (7, 8; 220, 221) über der zweiten Schicht (8; 221) gebildet ist;
welche erste Schicht (7; 220) und welche dritte Schicht (9; 222) austauschgekoppelt sind und antiparallele Magnetisierungen haben.

2. Magnetisches Aufzeichnungsmedium nach Anspruch 1, bei dem die erste Schicht (7) aus einem Material ist, das ausgewählt ist aus einer Gruppe bestehend aus Co, Ni, Fe, Legierungen auf Ni-Basis, Legierungen auf Fe-Basis und Legierungen auf Co-Basis, die CoCrTa, CoCrPt und CoCrPt-M enthalten, wobei M = B, Mo, Nb, Ta, W, Cu oder deren Legierungen entspricht.

3. Magnetisches Aufzeichnungsmedium nach Anspruch 1 oder 2, bei dem die zweite Schicht (8) aus einem Material ist, das ausgewählt ist aus einer Gruppe bestehend aus Ru, Rh, Ir, Legierungen auf Ru-Basis, Legierungen auf Rh-Basis und Legierungen auf Ir-Basis.

4. Magnetisches Aufzeichnungsmedium nach irgendeinem vorhergehenden Anspruch, bei dem die zweite Schicht (8) eine Dicke in einem Bereich zwischen 0,4 und 1,0 nm hat.

5. Magnetisches Aufzeichnungsmedium nach irgendeinem vorhergehenden Anspruch, bei dem die dritte Schicht (9) aus einem Material ist, das ausgewählt ist aus einer Gruppe bestehend aus Co und Legierungen auf Co-Basis, die CoCrTa, CoCrPt und CoCrPt-M enthalten, wobei M = B, Mo, Nb, Ta, W, Cu oder deren Legierungen entspricht.

6. Magnetisches Aufzeichnungsmedium nach irgendeinem vorhergehenden Anspruch, ferner **gekennzeichnet durch**:
ein Substrat (1); und
eine Unterschicht (5), die über dem Substrat (1) vorgesehen ist;
wobei die Austauschschichtstruktur (7, 8) über der Unterschicht (5) vorgesehen ist.

7. Magnetisches Aufzeichnungsmedium nach Anspruch 6, ferner **gekennzeichnet durch**:
eine vierte Schicht (6), die eine nichtmagnetische Zwischenschicht bildet, die zwischen der Unterschicht (5) und der Austauschschichtstruktur (7, 8) angeordnet ist;
welche vierte Schicht (6) eine hcp-struktur-Legierung hat, die ausgewählt ist aus einer Gruppe bestehend aus CoCr-M, wobei M = B, Mo, Nb, Ta, W oder deren Legierungen entspricht, und eine Dicke in einem Bereich zwischen 1 und 5 nm hat.

8. Magnetisches Aufzeichnungsmedium nach irgendeinem vorhergehenden Anspruch, ferner **gekennzeichnet durch** wenigstens eine erste Austauschschichtstruktur und eine zweite Austauschschichtstruktur, die zwischen der ersten Austauschschichtstruktur und der dritten Schicht angeordnet ist, wobei die erste Schicht der zweiten Austauschschichtstruktur eine magnetische Anisotropie hat, die niedriger als jene der ersten Schicht der ersten Austauschschichtstruktur ist, und Magnetisierungen der ersten Schichten der ersten und zweiten Austauschschichtstrukturen antiparallel sind.

9. Magnetisches Aufzeichnungsmedium nach irgendeinem vorhergehenden Anspruch, ferner **gekennzeichnet durch** wenigstens eine erste Austauschschichtstruktur und eine zweite Austauschschichtstruktur, die zwischen der ersten Austauschschichtstruktur und der dritten Schicht angeordnet ist,
wobei ein Produkt aus der remanenten Magnetisierung und der Dicke der ersten Schicht der zweiten Austauschschichtstruktur kleiner als jenes der ersten Schicht der ersten Austauschschichtstruktur ist und Magnetisierungen der ersten Schichten der ersten und zweiten Austauschschichtstrukturen antiparallel sind.

10. Magnetisches Aufzeichnungsmedium nach Anspruch 1, bei dem die zweite Schicht (221) aus einer Ru-M3-Legierung ist, wobei M3 ein hinzugefügtes Element oder eine hinzugefügte Legierung ist, und eine Gitterfehlanpassung zwischen der zweiten Schicht (221) und der dritten Schicht (222) und der ersten Schicht (220), die über bzw. unter der zweiten Schicht (221) angeordnet sind, durch das Hinzufügen von M3 auf etwa 6% oder weniger eingestellt ist.

11. Magnetisches Aufzeichnungsmedium nach Anspruch 1, bei dem die zweite Schicht (221) aus einer Ru-M3-Legierung ist, wobei M3 = Co, Cr, Fe, Ni, Mn oder deren Legierungen entspricht.

12. Magnetisches Aufzeichnungsmedium nach Anspruch 10 oder 11, bei dem eine Menge des Elementes M3, das zu Ru hinzugefügt ist, 50 Atom-% oder weniger bei Co, 50 Atom-% oder weniger bei Cr, 60 Atom-% oder weniger bei Fe, 10 Atom-% oder weniger bei Ni und 50 Atom-% oder weniger bei Mn ausmacht.

13. Magnetische Speichervorrichtung mit wenigstens einem magnetischen Aufzeichnungsmedium (16) und einem Mittel (17) zum Aufzeichnen von Informationen auf und/oder zum wiedergeben von Informationen von dem wenigstens einen magnetischen Aufzeichnungsmedium (16), **dadurch gekennzeichnet, daß** das wenigstens eine magnetische Aufzeichnungsmedium (16) umfaßt:
wenigstens eine Austauschschichtstruktur (7, 8; 220, 221), die eine erste Schicht (7; 220) aus ferromagnetischem Material umfaßt, und eine zweite Schicht (8; 221), die eine nichtmagnetische Kopplungsschicht bildet und auf der ersten Schicht (7; 220) vorgesehen ist; und
eine dritte Schicht (9; 222) aus magnetischem Material, die auf der Austauschschichtstruktur (7, 8; 220, 221) über der zweiten Schicht (8; 221) gebildet ist;
welche erste Schicht (7; 220) und welche dritte Schicht (9; 222) austauschgekoppelt sind und antiparallele Magnetisierungen haben.

## Revendications

1. Support d'enregistrement magnétique **caractérisé en ce qu'**il comprend au moins une structure à couche d'échange (7, 8 ; 220, 221) comprenant une première couche (7 ; 220) de matériau ferromagnétique et une deuxième couche (8 ; 221) qui forme une couche de couplage non magnétique prévue sur ladite première couche (7 ; 220) ; et
une troisième couche (9 ; 222) de matériau magnétique formée sur ladite structure à couche d'échange (7, 8 ; 220, 221) au dessus de ladite deuxième couche (8 ; 221) ;
ladite première couche (7 ; 220) et ladite troisième couche (9 ; 222) étant couplées par échange et ayant des magnétisations antiparallèles.

2. Support d'enregistrement magnétique selon la revendication 1, dans lequel ladite première couche (7) est réalisée à partir d'un matériau choisi dans un groupe comprenant Co, Ni, Fe, des alliages à base de Ni, des alliages à base de Fe, et des alliages à base de Co comprenant CoCrTa, CoCrPt et CoCrPt-M, où M = B, Mo, Nb, Ta, W, Cu ou des alliages de ceux-ci.

3. Support d'enregistrement magnétique selon la revendication 1 ou 2, dans lequel ladite deuxième couche (8) est réalisée à partir d'un matériau choisi dans un groupe comprenant Ru, Rh, Ir, des alliages à base de Ru, des alliages à base de Rh, et des alliages à base de Ir.

4. Support d'enregistrement magnétique selon l'une quelconque des revendications précédentes, dans lequel ladite deuxième couche (8) présente une épaisseur comprise entre 0,4 et 1,0 nm.

5. Support d'enregistrement magnétique selon l'une quelconque des revendications précédentes, dans lequel ladite troisième couche (9) est réalisée à partir d'un matériau choisi dans un groupe comprenant Co, et des alliages à base de Co comprenant CoCrTa, CoCrPt et CoCrPt-M, où M = B, Mo, Nb, Ta, W, Cu ou des alliages de ceux-ci.

6. Support d'enregistrement magnétique selon l'une quelconque des revendications précédentes, **caractérisé en outre en ce qu'**il comprend :
un substrat (1) ; et
une sous couche (5) prévue au dessus dudit substrat (1) ;
ladite structure à couche d'échange (7, 8) étant prévue au dessus de ladite sous couche (5).

7. Support d'enregistrement magnétique selon la revendication 6, **caractérisé en outre en ce qu'**il comprend :
une quatrième couche (6) qui forme une couche intermédiaire non magnétique interposée entre ladite sous couche (5) et ladite structure à couche d'échange (7, 8) ;
ladite quatrième couche (6) comprenant un alliage à structure hcp choisi dans un groupe comprenant CoCr-M, où M = B, Mo, Nb, Ta, W ou des alliages de ceux-ci, et ayant une épaisseur comprise entre 1 et 5 nm.

8. Support d'enregistrement magnétique selon l'une quelconque des revendications précédentes, **caractérisé en outre en ce qu'**il comprend au moins une première structure à couche d'échange et une seconde structure à couche d'échange interposée entre ladite première structure à couche d'échange et ladite troisième couche, dans lequel ladite première couche de ladite seconde structure à couche d'échange possède une anisotropie magnétique inférieure à celle de la première couche de ladite première structure à couche d'échange, et les magnétisations des premières couches desdites première et seconde structures à couche d'échange sont antiparallèles.

9. Support d'enregistrement magnétique selon l'une quelconque des revendications précédentes, **caractérisé en outre en ce qu'**il comprend au moins une première structure à couche d'échange et une seconde structure à couche d'échange interposée entre ladite première structure à couche d'échange et ladite troisième couche, dans lequel un produit de magnétisation et d'épaisseur résiduelles de la première couche de ladite seconde structure à couche d'échange est inférieur à celui de la première couche de ladite première structure à couche d'échange, et les magnétisations des premières couches desdices première et seconde structures à couche d'échange sont antiparallèles.

10. Support d'enregistrement magnétique selon la revendication 1, dans lequel ladite deuxième couche (221) est réalisée à partir d'un alliage Ru-M3, dans lequel M3 est un élément ou alliage ajouté, et on règle une inégalité dans les paramètres de maille entre ladite deuxième couche (221) et ladite troisième couche (222) et ladite première couche (220) respectivement disposée sur et au dessous de ladite deuxième couche (221) à environ -6% ou moins par l'ajout de M3.

11. Support d'enregistrement magnétique selon la revendication 1, dans lequel ladite deuxième couche (221) est réalisée à partir d'un alliage Ru-M3, où M3 = Co, Cr, Fe, Ni, Mn, ou des alliages de ceux-ci.

12. Support d'enregistrement magnétique selon la revendication 10 ou 11, dans lequel une quantité de l'élément M3 ajouté à Ru est de 50% ou moins pour Co, 50% ou moins pour Cr, 60% ou moins pour Fe, 10% ou moins pour Ni, et 50% ou moins pour Mn.

13. Dispositif de stockage magnétique comprenant au moins un support d'enregistrement magnétique (16) et des moyens (17) pour enregistrer l'information sur et/ou reproduire l'information à partir dudit au moins un support d'enregistrement magnétique (16), **caractérisé en ce que** ledit au moins un support d'enregistrement magnétique (16) comprend :
au moins une structure à couche d'échange (7, 8 ; 220, 221) comprenant une première couche (7 ; 220) de matériau ferromagnétique et une deuxième couche (8 ; 221) qui forme une couche de couplage non magnétique prévue sur ladite première couche (7 ; 220) ; et
une troisième couche (9 ; 222) de matériau magnétique formée sur ladite structure à couche d'échange (7, 8 ; 220, 221) au dessus de ladite deuxième couche (8 ; 221) ;
ladite première couche (7 ; 220) et ladite troisième couche (9 ; 222) étant couplées par échange et ayant des magnétisations antiparallèles.
